(19) Europäisches Patentamt / European Patent Office / Office européen des brevets

(11) **EP 4 617 118 A1**

(12) **EUROPEAN PATENT APPLICATION**

(43) Date of publication:
**17.09.2025 Bulletin 2025/38**

(21) Application number: **24163215.7**

(22) Date of filing: **13.03.2024**

(51) International Patent Classification (IPC):
**B60N 2/90** (2018.01)

(52) Cooperative Patent Classification (CPC):
**B60N 2/914;** B60N 2/665; B60N 2/976

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Schukra Berndorf GmbH
2560 Berndorf (AT)**

(72) Inventors:
• **SAMAIN, Maxime
8530 Harelbeke (BE)**
• **KALMUTZKI, Martin
91174 Spalt (DE)**
• **STRECK, Heiko
90574 Rosstal (DE)**
• **MOHARAM, Yaser
96465 Neustadt bei Coburg (DE)**

(74) Representative: **Kraus & Lederer PartGmbB
Thomas-Wimmer-Ring 15
80539 München (DE)**

Remarks:
Amended claims in accordance with Rule 137(2)
EPC.

(54) **A PNEUMATIC SYSTEM AND A FLOW-BRAKING DEVICE FOR SEAT UPHOLSTERY OF A VEHICLE**

(57)    A flow-braking device for a pneumatic system and a seat component for a vehicle is provided. A flow-braking device comprises a solid body for connecting at least two bladders. The solid body comprises a channel extending through the solid body from one bladder to another bladder for transmitting a fluid between the at least two bladders. The channel is configured to control fluid movement between the at least two bladders by restricting a flow of the fluid flowing in a direction from a bladder having a higher pressure to a bladder having a lower pressure for controllable deflation of the bladder having the higher pressure. The pneumatic system comprises a flow-braking device and at least two bladders interconnected by the flow-braking device. The seat component for a vehicle comprises the pneumatic system and a layer of foam. The flow-braking device allows to reduce the thickness of the layer of foam used in seat upholstery of a vehicle for cushioning. Reduced thickness of the layer of foam in turn allows to reduce environmental impact induced by producing seat upholstery of a vehicle.

EP 4 617 118 A1

## Description

The present disclosure relates to a pneumatic system and a flow-braking device for seat upholstery of a vehicle for reducing environmental impact associated with the seat upholstery.

## Prior art

The prior art provides a comfort level of a seat of a vehicle by a sufficiently thick foam layer in the padding, which ensures even pressure distribution and prevents high pressure peaks.

However, due to increasing requirements for reducing environmental impact, the amount of foam used in vehicles (cars), including seat upholstery, needs to be reduced. Reducing the foam thickness results in pressure peaks and discomfort. Thus, reducing the amount of foam in a seat upholstery has a negative impact on comfort of a passenger or a driver.

There have been trials in the prior art to replace a part of the foam with one or more connected inflatable air bladders. The one or more bladders could solve the comfort and environmental impact problem, yet such cases were not suitable for a seat of a vehicle due to a quick movement of air escaping from a high-pressure area to a low-pressure area. This quick movement of air is disadvantageous for comfort and stability during movement (driving) of a vehicle.

In these trials to reduce the foam amount by adding one air bladder, a problem of a "balloon effect" emerged. The "balloon effect" may be characterised by the bladders being formed as a balloon with the middle section being inflated to a larger height than the areas near the edges. The problems associated with one air bladder related to the "balloon effect" that was a contributor to discomfort. Attempts have been made to solve the problems associated with the "balloon effect". One approach to solve the problem associated with the "balloon effect" was to add height restrictors to the bladders. The height restrictors were similar to height restrictors found in air mattresses. This case could prove more expensive, resource consuming and more complex in terms of manufacturing, e.g., due to a welding process. In addition to that, also in this case the problem of quick air movement in the bladder was still present resulting in instability and discomfort.

Another approach to solve the problem associated with the "balloon effect" was to divide the bladder into many small bladders. The small bladders could be connected to allow air flow between them. However, also in this case the problem of quick air movement between the bladders was still present resulting in instability and discomfort. In another implementation, there appeared a new problem associated with many small bladders. The new problem related to isolated bladders that did not allow air flow between the bladders ("bubble wrap" effect). Due to the "bubble wrap" effect, i.e., absence of air movement between the bladders, there was no relief on high pressure areas. Thus, the attempt directed at many small bladders did not solve the problem associated with the discomfort.

Accordingly, in order to reduce environmental impact, it would be preferable to reduce the amount of foam in seat upholstery of a vehicle without compromising comfort. It would be even more preferrable to reduce the amount of foam in seat upholstery while, at the same time, improving the comport.

## Summary

In a first aspect, a flow-braking device comprises a solid body for connecting at least two bladders. The solid body comprises a channel extending through the solid body from one bladder to another bladder for transmitting a fluid between the at least two bladders. The channel is configured to control fluid movement between the at least two bladders by restricting a flow of the fluid flowing in a direction from a bladder having a higher pressure to a bladder having a lower pressure for controllable deflation of the bladder having the higher pressure.

In an example, the channel of the flow-braking device may be configured to provide a fluid flow suitable for a pneumatic system for cushioning of a seat of a vehicle.

In an example, the channel of the flow-braking device may be configured to provide a flow rate of the fluid flow in a range of up to 10 liters per minute, or preferably, in a range between 0,1 and 2,0 liters per minute, or more preferably, in a range between 0,02 liters per minute and 0,15 liters per minute.

In an example, the channel of the flow-braking device may be configured to provide the flow rate of the fluid flow in the range between 0,1 and 2 liters per minute by having a channel diameter or width in a range between 0,4 mm and 1,5mm and a channel length in a range between 0,5mm and 29,5mm, or preferably, the channel length equal to 2,6 mm.

In an example, the channel of the flow-braking device may be configured to provide the flow rate of the fluid flow in the range between 0,02 liters per minute and 0,15 liters per minute by having the channel diameter or width equal to 0,4 mm and the channel length in a range between 0,5mm up to 29,5 mm.

In an example, the channel of the flow-braking device may be configured to provide a flow rate of the fluid flow in a range between 0,3 liters per minute and 0,6 liters per minute by having the channel diameter or width equal to 0,8 mm and the channel length in a range between 0,5mm up to 29,5 mm.

In an example, the channel of the flow-braking device may be configured to provide a flow rate of the fluid flow in a range between 1,85 liters per minute and 2,25 liters per minute by having the channel diameter or width equal to 1,5 mm and the channel length in a range between 0,5mm up to 29,5mm.

In an example, the solid body of the flow-braking device may be a hollow cylinder and the channel may be provided by the cylinder's hollow.

In an example, the cylinder's hollow may be arranged along the central axis of the hollow cylinder.

In an example, the cylinder's hollow may have a circular cross section perpendicular to the central axis of the cylinder.

In an example, the solid body may be a solid cylinder and the channel may be provided as a recession embedded into the lateral side of the solid cylinder.

In an example, the recession may extend along a straight line perpendicular to the end faces of the solid cylinder. In an alternative example, the recession may extend along a curved line between the end faces of the solid cylinder (102c). In a further example, the curved line may be a helical line spiraling around the solid cylinder.

In an example, the solid body may be a flat-sided solid having an upper side and a lower side extending between the at least two bladders, wherein the channel may be provided by welding the channel in the flat-sided solid between the at least two bladders and between the upper and the lower sides of the flat-sided solid.

In an example, the channel may be welded along a curved and/or an angled line for providing fluid turbulence in the channel.

In an example, the flow-braking device may further comprise a proportionate valve. The proportionate valve may comprise an adjustable opening for regulating an opening of the channel thereby regulating the flow rate of the fluid.

According to a second aspect, a pneumatic system for seat upholstery of a vehicle comprises at least one flow-braking device according to the first aspect. The pneumatic system further comprises at least two bladders interconnected by the at least one flow-braking device.

In an example, an inner space of the at least two bladders and the channel of the at least one flow-braking device of the pneumatic system may be configured as a closed space having a predefined pressure.

In an example, an inner space of the at least two bladders and the channel of the at least one flow-braking device of the pneumatic system may be configured as an open system connectable to a pump.

In an example, the pneumatic system may further comprise at least one additional bladder, in addition to the at least two bladders. Each additional bladder may have a spring. Each additional bladder may be connected to at least one of the at least two bladders by at least one additional flow-braking device. The at least one additional flow-braking device may be a flow-braking device according to the first aspect.

According to a third aspect, a seat component for a vehicle comprises the pneumatic system of the second aspect and a layer of foam. The layer of foam according to the third aspect is arranged above the at least two bladders when the layer of foam is viewed in the direction of gravity force when the seat component is for a seat cushion or when the layer of foam is viewed in a front-to-back direction along the centerline of the vehicle when the seat component is for a seat backrest.

In an example, the layer of foam may have a thickness equal to or less than 50 mm.

In an example, the layer of foam may have a thickness in a range between 50 mm and 5 mm, or in a range between 10 mm and 30 mm.

Technical advantages offered by the current disclosure may relate to reducing the amount of foam for manufacturing a seat upholstery of a vehicle without compromising the comfort of a passenger or driver. Reduced amount of foam may result in reduced environmental impact associated with the seat upholstery. The flow-braking devices of the current disclosure provides cushioning of a seat of a vehicle (without a rapid air movement) thereby improving the comfort while allowing to reduce the amount of foam. Various embodiments of the disclosure may provide further advantages associated with further improving the comfort.

**Brief description of the drawings**

Figure 1a schematically illustrates a variation 100a of a flow-braking device 100.

Figure 1b schematically illustrates a variation 100b of a flow-braking device 100.

Figure 1c schematically illustrates a variation 100c of a flow-braking device 100.

Figure 2a schematically illustrates a variation 200a of flow-braking device 200.

Figure 2b schematically illustrates a variation 200b of a flow-braking device 200.

Figure 2c schematically illustrates a variation 200c of a flow-braking device 200.

Figure 3 schematically illustrates a pneumatic system 300 comprising a flow-braking device 200.

Figure 4a schematically illustrates a variation 400a of a pneumatic system 400 comprising a flow-braking device 100 or flow-braking device 200.

Figure 4b schematically illustrates a variation 400b of a pneumatic system 400 comprising a flow-braking device 100 or flow-braking device 200.

Figures 5 schematically illustrates a pneumatic system 500.

Figure 6a schematically illustrates a variation 600a of a pneumatic system 600.

Figure 6b schematically illustrates a variation 600b of a pneumatic system 600.

Figure 7 schematically illustrates a seat component 700 for a vehicle.

Figure 8 schematically illustrates a pneumatic system 800.

Figure 9a schematically illustrates a possible range of the flow rate of a fluid as a function of a diameter or width at a fixed length of a channel of a flow-braking device 100 or flow-braking device 200.

Figure 9b schematically illustrates a possible range of the flow rate of a fluid as a function of a length at a fixed diameter or width of a channel of a flow-braking device 100 or flow-braking device 200.

Figure 10 schematically illustrates a pneumatic system 1000.

## Detailed description of preferred embodiments

The properties, features and advantages of this disclosure described above and the way in which they are achieved will become more clearly understood in association with the following description of the exemplary embodiments which are explained in greater detail in connection with the drawings. For simplicity and illustrative purposes, the present disclosure is described by referring mainly to an exemplary embodiments or examples thereof. In the following description, numerous specific details are set forth in order to provide a thorough understanding of the present disclosure. However, it will be readily apparent to one of ordinary skill in the art that the present disclosure may be practiced without limitation to these specific details. In this description, well-known methods and structures have not been described in detail so as not to unnecessarily obscure the present disclosure.

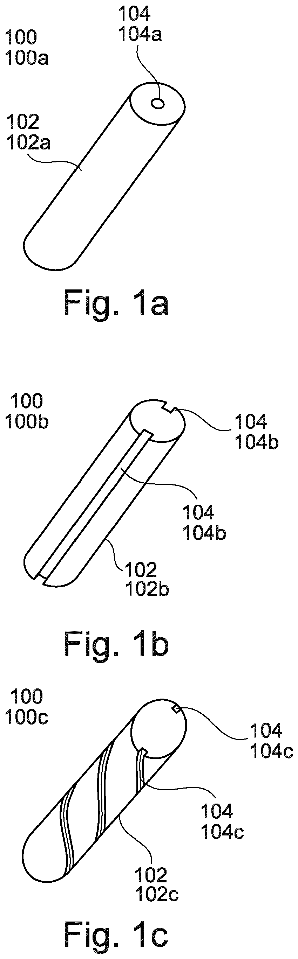

Figures 1a-1b illustrate a flow-braking device 100. The flow-braking device 100 may have several variations (e.g., variation 100a, variation 100b and variation 100c described in the context of figs. 1a, 1b and 1c, respectively.)

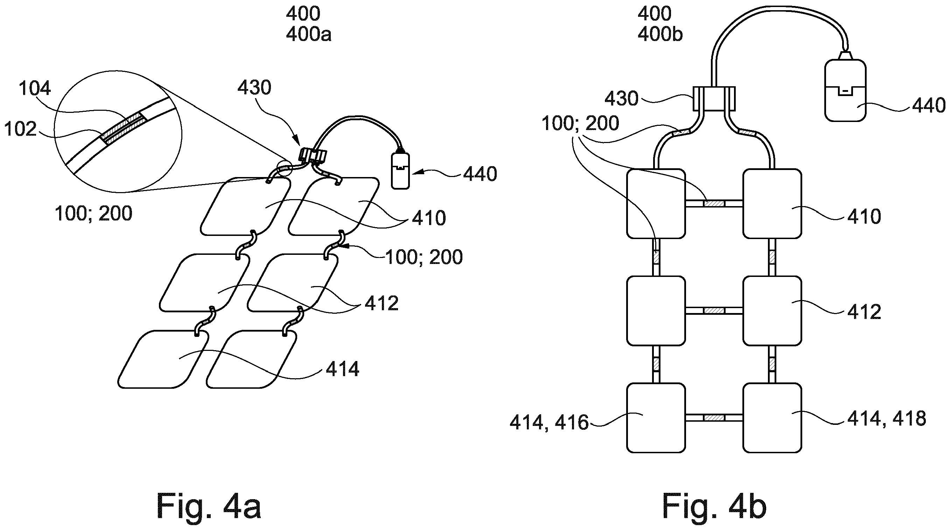

A flow-braking device 100 comprises a solid body 102 for connecting at least two bladders 410, 412, 414, 416, 418; 526, 528; 610, 612; 710, 712; 810, 812; 1010. The at least two bladders may comprise features as described in the context of figs. 4, 5, 6, 7, 8, and 10. The solid body 102 comprises a channel 104 extending through the solid body from one bladder 410, 414, 416; 522; 524; 610; 710; 810 to another bladder 412, 414, 418; 522; 524; 612; 712; 812 for transmitting a fluid between the at least two bladders. The channel is configured to control fluid movement between the at least two bladders by restricting a flow of the fluid flowing in a direction from a bladder having a higher pressure 206; 1006 to a bladder having a lower pressure 208 for controllable deflation of the bladder having the higher pressure 206; 1006.

One technical advantage of flow-braking device 100 may relate to that the flow-braking device 100 may allow for connecting bladders for seat upholstery of a vehicle and may enable controllable fluid movement between the bladders for better comfort by relieving high pressure areas without rapid fluid movements.

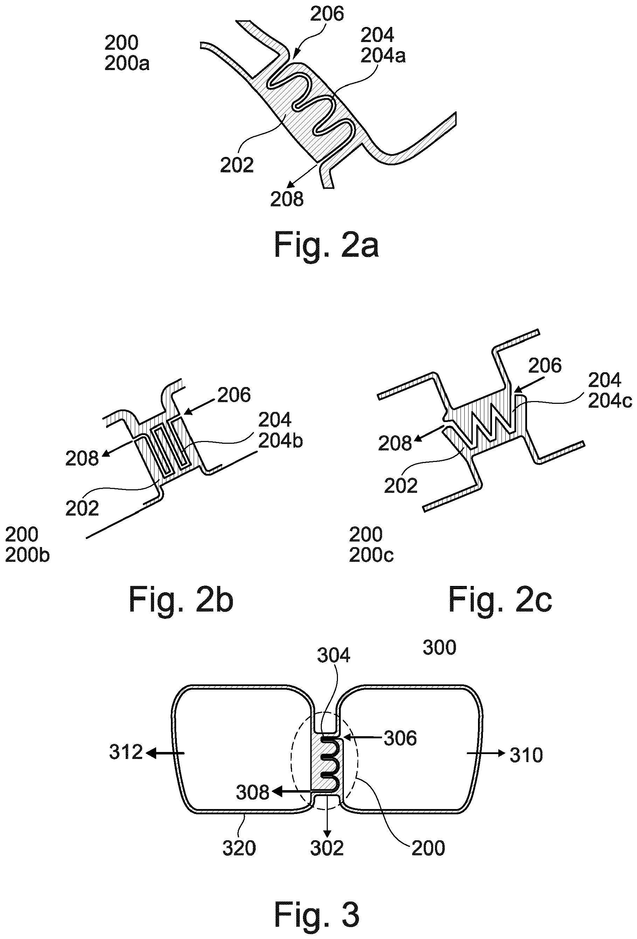

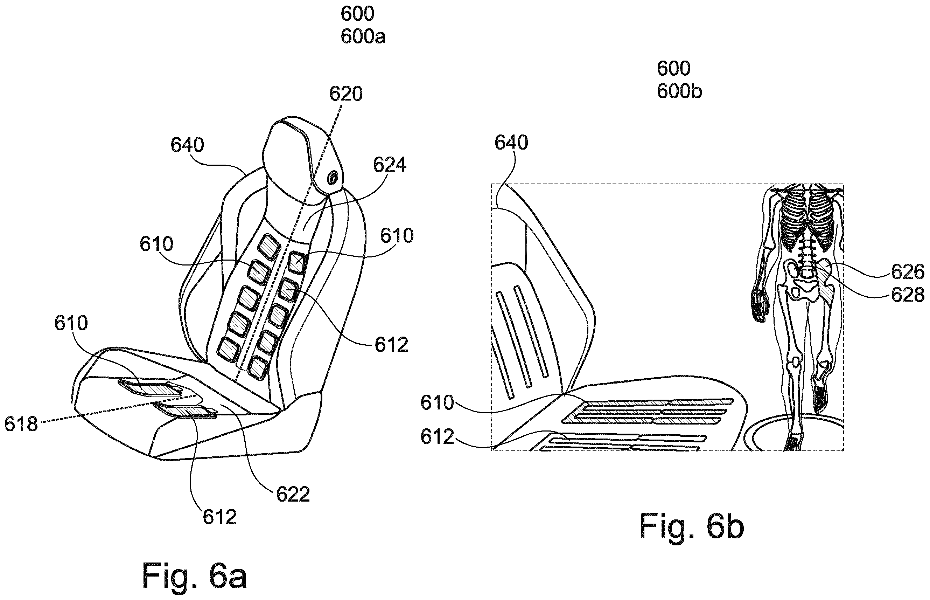

In an example, the channel of the flow-braking device 100 may be configured to provide a fluid flow suitable for a pneumatic system 300, 400, 500, 600, 800, 1000. The pneumatic system 300, 400, 500, 600, 800, 1000 may comprise features as described in the context of figs. 3, 4, 5, 6, 8 and 10, respectively. A pneumatic system 300, 400, 500, 600, 800, 1000 may be used for cushioning of a seat of a vehicle 640 as, for example, described in the context of fig. 6.

A solid body 102 (implemented as a hollow cylinder 102a, a solid cylinder 102b, a solid cylinder 102c, a flat-sided solid 202, or a flat-sided solid 302) in the context of the current disclosure may be defined as a physical object that maintains a stable and definite shape after manufacturing and during exploitation (e.g., driving). For example, a solid body may not be made of a fluid or gas that cannot maintain a stable shape. Solid body may be made of a solid material (e.g.,

plastic, metal, polymer, organic or inorganic material) that maintains a stable shape, when used as a part of seat upholstery under typical driving conditions.

Fluid in the context of current disclosure may be a gas (e.g., air, nitrogen, etc.) or a liquid (e.g., water, a solution, etc.).

Figure 1a schematically illustrates a variation 100a of a flow-braking device 100. The solid body 102 of the flow-braking device 100 of variation 100a may be implemented as a hollow cylinder 102a. Channel 104 of the flow-braking device 100 of variation 100a may be provided by the cylinder's hollow 104a.

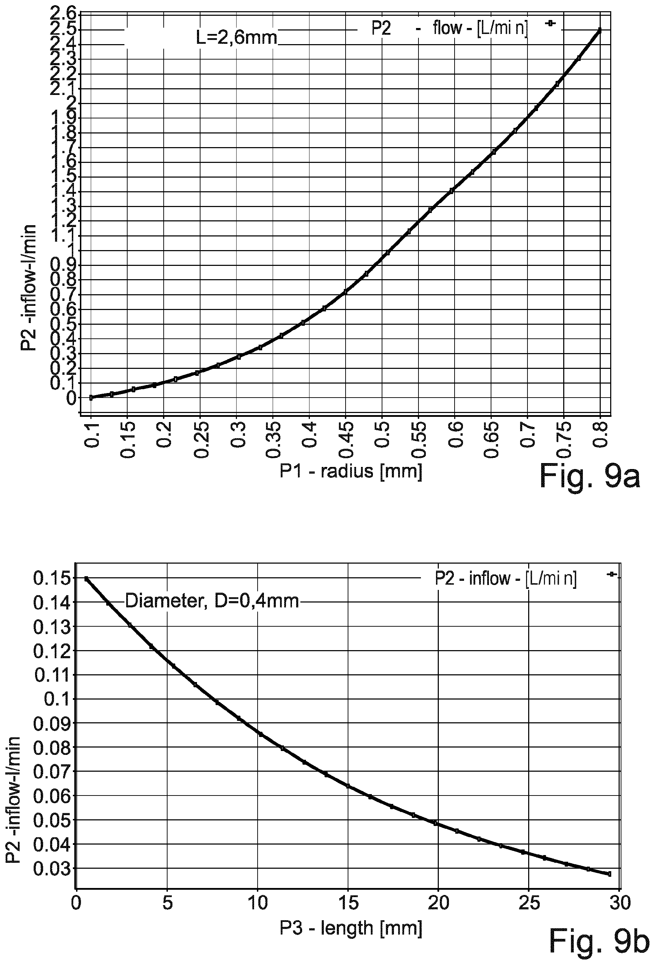

One technical advantage of the flow-braking device 100 of variation 100a may relate to simplified manufacturing of prototype parts. In addition, flow-braking device 100 of variation 100a may have a straightforward configuration in the sense that the diameter of the cylinder's hollow can be easily adjusted based on the required flow rate of the fluid and/or based on computer simulation or calculation such as the ones described in the context of figs. 9a, 9b.

The flow-braking device 100 of variation 100a may be easier to manufacture for a smaller production size, while other variations of the flow breaking device (e.g., described in the context of figs. 1b, 1c, 2 and 3) that use recession on the circumference may be easier to manufacture for bigger serial production. A hollow cylinder 102a may be more robust in the sense that the risk of blocking the channel 104 during manufacturing, for example, due to high temperature melting plastic material of the solid body 102 can be minimised.

Another advantage of the hollow cylinder 102a may be that a turbulent flow and whistle effect can be avoided by avoiding sharp edges.

The solid body 102 of the flow-braking device 100 of variation 100a may be made of any material that allows for smoothening of the material after manufacturing in order not to cause turbulences in the fluid flow, e.g., plastic. It may be advantageous to produce solid body 102 of the flow-braking device 100 of variation 100a from a material that is easy to form, e.g., plastic.

In an example, potential blockage or obstruction of the cylinder's hollow 104a due to using a flexible material that can bend may be prevented by, for example, setting a predefined internal fluid pressure that may force the cylinder's hollow 104a to stay straight (not to be bend during exploitation). Bending may be prevented if the external bending force is lower than the force generated by fluid pressure.

In another example, bending of the hollow cylinder 102a may be, additionally or alternatively, prevented by using two parallel channels, for example, implemented as two parallel cylinder's hollows. In an example, cylinder's hollows may be parallel to each other. Stated differently, cylinder's hollows may reduce the risk of obstruction of the channel 104 due to potential bending of the hollow cylinder 102a.

In an example, using a flexible material advantageous for manufacturing that can bend (e.g., plastic) may be combined with using multiple parallel channels that can be advantageous for exploitation, i.e., preventing potential blockage or obstruction of the cylinder's hollow 104a due to bending.

In an example, the cylinder's hollow 104a may be arranged along the central axis of the hollow cylinder 102a. One technical advantage of such an arrangement may relate to a straightforward configuration for manufacturing. The diameter of the hollow can be easily adjusted based on the required flow rate and/or based on computer simulation or calculation (e.g., as described in the context of figs. 9a, 9b). The configuration of the flow-braking device 100 of variation 100a may be even more advantageous for smaller serial production.

In an example, the cylinder's hollow may have a circular cross section perpendicular to the central axis of the cylinder. One technical advantage of such an arrangement may relate to further simplifying the configuration of the flow-braking device 100 for manufacturing. The diameter of the hollow can be easily adjusted based on the required flow rate and/or based on computer simulation or calculation (e.g., as described in the context of figs. 9a, 9b). Thus, the circular cross section perpendicular to the central axis of the cylinder can bring further advantages for manufacturing in smaller serial production.

Figure 1b schematically illustrates a variation 100b of a flow-braking device 100. The flow-braking device 100 in fig. 1b comprises the solid body 102 that is implemented as a solid cylinder 102b. Channel 104 of the flow-braking device 100 in fig. 1b is provided as a recession 104b that is embedded into the lateral side of the solid cylinder 102b.

In an example, embedding may be carried out by, e.g., welding, laser engraving, mechanical means and/or alike.

One technical advantage provided by the flow-braking device 100 in fig. 1b may relate to a possibility of extending the channel length by having a recession 104b. The recession 104b may be a plurality of recessions comprising at least one recession. For example, in fig. 1b there are two recessions illustrated. In other examples, there may be more than two recessions. In case of multiple recessions, the length of one recession may be multiplied by the number of recessions resulting in the total channel length.

The recession 104b may allow for an extension of channel 104 implemented in a simple for manufacturing manner.

Another technical advantage provided by the flow-braking device 100 in fig. 1b may be reducing the risk of channel blockage due to bending of the solid body. The recession 104b may be insensitive to become obstructed when the solid body bends.

In an example, the recession 104b may extend along a straight line perpendicular to the end faces of the solid cylinder 102b. The implementation of the recession 104b as the straight line perpendicular to the end faces of the solid cylinder 102b may provide a straightforward calculation of the channel dimensions, as, for example, described in the context of figs. 9a and 9b. The implementation of the recession 104b as the straight line may also provide simplified manufacturing of the recession.

Figure 1c schematically illustrates a variation 100c of a flow-braking device 100.

The flow-braking device 100 in fig. 1c comprises the solid body 102 that is implemented as a solid cylinder 102c. Channel 104 of the flow-braking device 100 in fig. 1c is provided as a recession 104c that is embedded into the lateral side of the solid cylinder 102c.

One technical advantage provided by the flow-braking device 100 in fig. 1c may be a possibility to extend the channel length by having recession 104c.

Recession 104c may be a plurality of recessions comprising at least one recession. For example, in fig. 1c there are two recessions. In other examples, there may be more than two recessions. In case of multiple recessions, the length of one recession may be multiplied by the number of recessions resulting in the total length of channel 104.

One technical advantage provided by the flow-braking device 100 in fig. 1c may relate to reduced risk of closing (obstruction) of the channel 104 when the solid cylinder 102c bends because recession 104c may be insensitive to bending.

In an example, multiple recessions may provide the possibility to easily extend the channel 104.

In another example, the flow-braking device 100 in fig. 1c may provide extension of the channel 104 by having the recession 104c that may be a curved line. The curvature of the line may provide even longer channel as compared to the case of a straight line.

In another example, the curved line may be a plurality of curved lines comprising at least one curved line allowing to extend the channel even further.

The dimensions (diameter or width and length) of the channel 104 in the context of figs. 1a, 1b, 1c and corresponding flow rates for the channel having said dimensions may be obtained according to the principles as described in the context of figs. 9a and 9b.

In an example, the recession 104c may extend along a curved line between the end faces of the solid cylinder 102c. Implementing channel 104 along the curved line can extend channel 104 thereby reducing the fluid flow.

In an example, the curved line may be a helical line spiraling around the solid cylinder 102c.

Implementing channel 104 along the helical line can extend the channel 104 and, at the same time, manufacturing of the helical line may be simplified. For example, recession 104c (as well as recession 104b) can be easier to manufacture especially in bigger serial production.

Another technical advantage of variation 100c (as well as variation 100b) may relate to that recession 104c (as well as recession 104b) may be insensitive to bending and obstructing the channel 104 due to bending.

Figures 2a-2c illustrate a flow-braking device 200. The flow-braking device 200 may have several variations (e.g., variation 200a, variation 200b, variation 200c).

The flow-braking device 200 comprises a solid body that may be implemented as a flat-sided solid 202 having an upper side and a lower side extending between at least two bladders. Channel 204 of the flow-braking device may be provided by welding the channel in the flat-sided solid 202 between the at least two bladders and between the upper and the lower sides of the flat-sided solid 202. The material of the channel may be weldable, e.g., weldable plastic.

One technical advantage of flow-braking device 200 may relate to altering the width and/or shape of the channel to achieve different transfer speeds of fluid.

A fluid flow may be slowed down by turbulence in the channel. The turbulence may be caused by the channel having bends, corners, angles and alike.

In an example, there may be manufacturability restrictions on the smallest achievable channel width. This can be counter measured by altering the geometry of the channel to elongate the fluid travel time through adding bends of the line along which the channel is embedded (welded), adding corners and/or angels that create turbulence and also elongate the travel distance of fluid. These geometries can be shaped as, for example, described in the context of figs. 2a, 2b, 2c. One example of such geometry may be a zigzag line described in the context of fig. 2c. Another example of such geometry may be a "snake like path" described in the context of fig. 2a. A further example of such geometry may be another angled line comprising one or more rectangular sections as described in the context of fig. 2b. Further geometries may be implemented using bended lines (e.g., lines comprising circular or elliptical sections), corners and/or angles as means to slow the fluid flow.

Figure 2a schematically illustrates a variation 200a of flow-braking device 200.

In an example, the channel 204 may be welded along a curved 204a line for providing fluid turbulence in the channel. The curved line 204a may be a snake like path. The curved line 204a may comprise a plurality of consecutive circular and/or elliptical sections connected such that said sections form a curved line. The material of the channel may be weldable, e.g., weldable plastic.

One technical advantage of the variation 200a may be a possibility to achieve a predefined transfer speed of the fluid (or fluid flow) by said curved line 204a.

Figure 2b schematically illustrates a variation 200b of a flow-braking device 200.

In an example, the channel 204 may be welded along an angled line 204b for providing fluid turbulence in the channel. The angled line 204b may comprise one or more rectangular sections connected such that said sections form a continuous angled line. The one or more rectangular sections may comprise a plurality of connected perpendicular lines forming consecutive rectangular sections connected such that said sections form a continuous angled line extending through the solid body. One technical advantage of angled line 204b may be the possibility to achieve a predefined transfer speed of the fluid (or fluid flow).

Figure 2c schematically illustrates a variation 200c of a flow-braking device 200.

In an example, the channel 204 may be welded along an angled line 204c providing fluid turbulence in the channel. The material of the channel may be weldable, e.g., weldable plastic.

The angled line 204c may be implemented as a zigzag. The zigzag may comprise a plurality of straight lines connected at an angle. The angle may be more than zero and less than 180 degrees. The angle may be more than zero and equal to or less than 90 degrees. The plurality of lines may be connected such that said plurality of lines forms a continuous angled line extending through the solid body. One technical advantage of this implementation may be the possibility to achieve a predefined transfer speed of the fluid.

Figure 3 schematically illustrates a pneumatic system 300 comprising a flow-braking device 200.

The flow-braking device illustrated in the context of fig. 3 comprises a solid body implemented as a flat-sided solid 302 having an upper side and a lower side extending between the at least two bladders 310, 312, wherein the channel 304 may be provided by welding the channel in the flat-sided solid 302 between the at least two bladders 310, 312 and between the upper and the lower sides of the flat-sided solid 302. The material of the flat-sided solid 302 may be weldable, e.g., a weldable plastic.

In an example, the channel 304 may be welded along a curved line as illustrated in the context of fig. 2a (i.e., curved line 204a).

In an example, the channel 304 may be welded along a curved line as illustrated in the context of fig. 2b (i.e., angled line 204b) or fig. 2c (i.e., angled line 204c) for providing fluid turbulence in the channel.

Channel 304 or channel 204 as illustrated in the context of figs. 2 and 3, respectively, may be implemented by a combination of curved line 204a, angled line 204b, and/or angled line 204c. For example, the channel 304 or channel 204 may comprise a plurality of sub sections, each sub section being formed by one of a curved line 204a, an angled line 204b or an angled line 204c, wherein each sub section may be connected to another sub section forming a continuous angled and/or curved line.

The pneumatic system 300 described in the context of fig. 3 may be used for seat upholstery of a vehicle. The pneumatic system 300 comprises at least one flow-braking device 200. The flow-braking device 200 may comprise features as described in the context of figs. 2 and 3. The pneumatic system 300 further comprises at least two bladders 310 and 312 interconnected by the at least one flow-braking device 200.

In an example, the at least two bladders 310 and 312 may comprise welding areas 320. In an example, the at least two bladders 310 and 312 may be made of a weldable material, e.g., a weldable plastic. The flat-sided solid 302 may be made of a weldable material, e.g., a weldable plastic. The weldable material of the at least two bladders 310 and 312 and the flat-sided solid 302 may be the same (e.g., the same plastic material) or different (e.g., two different plastic materials).

Figures 4a-4b schematically illustrate a pneumatic system 400. The pneumatic system 400 may have several variations such as variation 400a and 400b, as described in the context of figs. 4a and 4b, respectively.

The pneumatic system 400 may be used for seat upholstery of a vehicle. The pneumatic system 400 comprises at least one flow-braking device 100 or flow-braking device 200. The flow-braking device 100 or flow-braking device 200 may comprise features as described in the context of figs. 1, 2 and 3. The pneumatic system 400 further comprises at least two bladders 410, 412, 414, 416, 418 interconnected by the at least one flow-braking device 100 or flow-braking device 200.

In an example, the flow-braking device 100 or flow-braking device 200 may comprise a proportionate valve 430. The proportionate valve 430 may provide an additional regulation of the fluid flow through the channel by having an adjustable opening.

In an example, the pneumatic system 400 may further comprise a proportionate valve 430 and a pump 440. In an example, the proportionate valve 403 may be a part of a flow-braking device 100 or a flow-braking device 200. In another example, the proportionate valve 403 may be a part of the pneumatic system 400.

Proportionate valve 430 illustrated in fig. 4 may be provided in combination with flow-braking device 100 or flow-braking device 200 described in the context of figs. 1, 2 and 3 or the pneumatic systems described in the context of figs. 3, 4, 5, 6, 7, 8, 10. The proportionate valve 430 is not shown in figs. 1, 2, 3, 4, 5, 6, 7, 8, 10.

The proportionate valve 430 provided for the pneumatic system 400 may comprise an adjustable opening for regulating an opening for the channel thereby regulating the flow rate of the fluid.

Figure 4a schematically illustrates a variation 400a of a pneumatic system 400 comprising a flow-braking device 100 or flow-braking device 200.

The pneumatic system 400 may be used for seat upholstery of a vehicle. The pneumatic system 400 comprises at least one flow-braking device 100 or flow-braking device 200. The at least one flow-braking device 100 or flow-braking device 200 may comprise features as described in the context of figs. 1, 2 and 3. The pneumatic system 400 further comprises at least two bladders 410, 412, interconnected by the at least one flow-braking device 100 or flow-braking device 200.

One bladder of the at least two bladders 410, 412 in variation 400a may have at least one connection connecting it with another bladder of the at least two bladders 410, 412.

In an example, the at least two bladders 410, 412 may be interconnected to form two rows of interconnected bladders, each row of bladders comprising at least one bladder. Each bladder of the at least two bladders 410, 412 forming two rows of bladders may have at least one connection, i.e., the connection implemented by the flow-braking device 100 or the flow-braking device 200.

In an example, one or more of the at least two bladders 410, 412 may have at least one additional connection, i.e., in addition to the at least one connection implemented by the flow-braking device 100 or the flow-braking device 200. The additional connection may be used for connecting a bladder of the at least two bladders 410, 412 to a proportionate valve 430, a pressure valve 860 or an additional bladder 1020 comprising a spring 1030.

In an example, pneumatic system 400 may comprise two bladders 410, 412 forming two rows of bladders, each row comprising one bladder, similar to the example illustrated in fig. 3. Each of the two bladders 410, 412 may have a first connection implemented by a flow-braking device 100 or a flow-braking device 200 for connecting the two bladders. At least one of the two bladders 410, 412 may have an additional, second connection for a proportionate valve 430, pressure valve 860 and/or a pump 440. The second connection may be used for connecting at least one of the two bladders 410, 412 to a pump 440 and a proportionate valve 430. At least one of the two bladders 410, 412 may have a third connection for connecting the least one bladder of the two bladders 410, 412 to an additional bladder 1020 comprising a spring 1030.

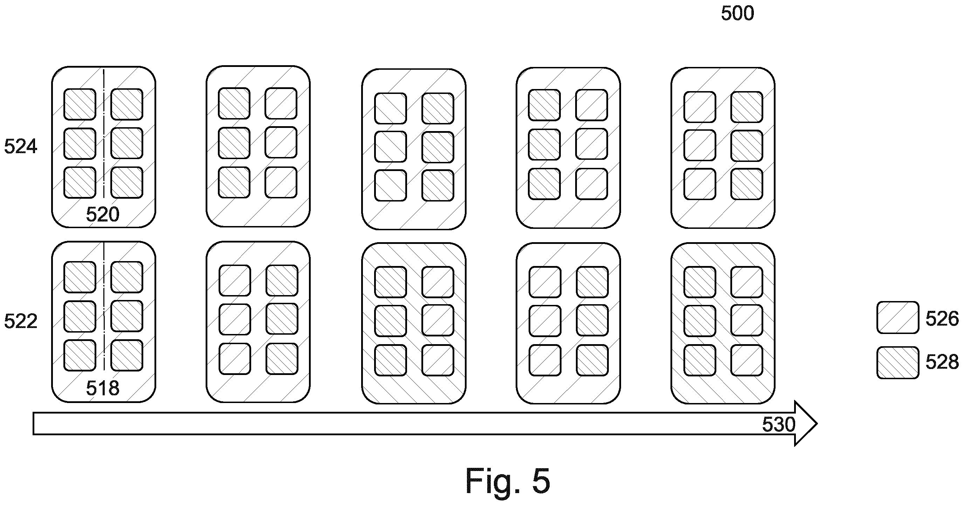

In another example, there may be more than one bladder in each row of bladders, e.g., three bladders, as illustrated by figs. 4a, 4b, 5. In another example, pneumatic system 400 may comprise five bladders in each row of bladders, as illustrated by fig. 6a. Three or five bladders are illustrated only as examples. The pneumatic system 400 may comprise an integer number of bladders in each row of bladders starting from one bladder and up to N bladders. N may be, for example, equal to 1, 2, 3, 4, 5, 6, etc., depending on the predetermined pressure resolution and manufacturing restrictions, e.g., manufacturing cost.

Each bladder of each row of bladders may be connected to another bladder of the same row of bladders via a flow-braking device 100 and/or a flow-braking device 200. Each bladder of each row of bladders may have at least one connection, a first connection. Each bladder of each row of bladders may have two connections, a first connection and a second connection. Each bladder of each row of bladders may have three connections, a first connection, a second connection and a third connection. Some bladders of each row of bladders may have one connection (a first connection), while some other bladders of the same row of bladders may have two connections (a first and a second connection). Some bladders of each row of bladders may have one connection (a first connection), two connections (a first and a second connection) and/or three connections (a first, a second and a third connection). Any one of a first, second or third connections may be implemented by a flow-braking device 200 and/or a flow-braking device 100.

For example, a first connection may be used to connect a first bladder (e.g., bladder 410 in a left row) to a second bladder (e.g., bladder 412 in a left row) in a first row of bladders. A second connection may be used to connect the second bladder (e.g., bladder 412 in a left row) in the first row of bladders to a third bladder (e.g., bladder 414 in a left row) in the first row of bladders. A first connection may be used to connect a first bladder (e.g., bladder 410 in a right row) to a second bladder (e.g., bladder 412 in a right row) in a second row of bladders. A second connection may be used to connect the second bladder (e.g., bladder 412 in a right row) in the second row of bladders to a third bladder (e.g., bladder 414 in a right row) in the second row of bladders.

A third connection may be used to connect at least one bladder (e.g., bladder 410 in a left and/or bladder 410 in a right row) in at least one row of bladders (left or right row) to a proportionate valve 430, a pressure valve 860, a pump 440 and/or an additional bladder 1020 comprising a spring 1030.

In an example, any one of a first, a second, a third and/or an N-th bladder in a first and/or a second row of bladders may be connected to an additional bladder 1020 comprising a spring 1030.

In an example, a first bladder in a first and/or second (left and/or right) rows of bladders may be connected to a proportionate valve 430 and a pump 440, as illustrated in fig. 4a. In this example, the second bladder in each row of bladders (first and second rows; or left and right rows) may be connected to a third bladders in each row of bladders (first and second rows; or left and right rows). Thus, the third (i.e., the last, N bladder) bladder in each row of bladders may have one connection, the first connection, while each of the first and the second bladders (i.e., N-1 bladder) in each row of bladders may have two connections, the first connection and the second connection, or the first and the third connection.

The terms "first", "second" or "third" should not be construed as limiting. At least one of the first, the second or the third connections may be implemented as a flow-braking device 100 or a flow-braking device 100 for connecting two bladders of the at least two bladders 410, 412, 414. At least one of the remaining connections may be implemented as a connection between at least one of the at least two bladders 410, 412, 414 and a proportionate valve 430 and a pump 440. At least one of the remaining connections may be implemented as a connection between at least one of the at least two bladders 410, 412, 414 and a pressure valve 860 or an additional bladder 1020 comprising a spring 1030. At least one of the remaining connections may be implemented as a connection to another bladder of the at least two bladders 410, 412, 414.

In an example, each row of bladders may comprise an equal number of bladders to form symmetrical rows of bladders. In an example, the symmetry may be associated with the symmetry of a human skeleton such that a first row of bladders corresponds to one side of the human skeleton and the second row of bladders corresponds to the other side of the human skeleton. In an example, symmetry may be associated with a seat of a vehicle, wherein a first row of bladders corresponds to one side of the seat and the second row of bladders corresponds to the other side of the seat.

In an example, the pneumatic system 400 may comprise two rows of bladders arranged on a seat of the vehicle in a symmetrical manner such that a first row of bladders corresponds to one side of the seat and the second row of bladders corresponds to the other side of the seat.

In an example, the pneumatic system 400 may comprise two rows of bladders arranged on a seat of the vehicle in a symmetrical manner such that an axis of symmetry of the seat corresponds to an axis of symmetry of the pneumatic system 400.

In an example, the axis of symmetry of the pneumatic system 400 may be defined as a centerline between the two rows of bladders arranged symmetrically with respect to the centerline.

In an example, the pneumatic system 400 may be implemented in seat upholstery of seat cushion and/or seat backrest.

Figure 4b schematically illustrates a variation 400b of a pneumatic system 400 comprising a flow-braking device 100 or flow-braking device 200.

The pneumatic system 400 may be used for seat upholstery of a vehicle. The pneumatic system 400 comprises at least one flow-braking device 100 or flow-braking device 200. The at least one flow-braking device 100 or flow-braking device 200 may comprise features as described in the context of figs. 1, 2 and 3. The pneumatic system 400 further comprises at least two bladders 410, 412, 414, 416, 418 interconnected by the at least one flow-braking device 100 or flow-braking device 200.

In variation 400b, the at least two bladders 410, 412, 414, 416, 418 may be interconnected by the flow-braking device 100 and/or flow-braking device 200 to form a grid of interconnected bladders. The grid of interconnected bladders may comprise two rows of consecutively connected bladders, wherein the bladders in the rows are cross connected. One bladder in variation 400b may have three connections (a first, a second and a third connection), each connection being implemented by the flow-braking device 100 or flow-braking device 200. One or more connections may be implemented by the flow-braking device 100, and/or one or more connections may be implemented by the flow-braking device 200. All three connections may be implemented by the flow-braking device 100 or flow-braking device 200.

A first connection may be used to connect j=1, 2, 3, ..., (n-1) bladder with j+1 bladder in the same raw of bladders. A second connection may be used to connect (j=2, 3, ... , n) bladder with two other bladders, (j-1) bladder and (j+1) bladder, in the same row of bladders. A third connection may be used to connect two bladders, a bladder having a number j=1, 2, 3, ... , n with a bladder having a corresponding j-number in the opposite row of bladders. A fourth connection may be used to connect at least one bladder of the at least two bladders to a proportionate valve 430, a pump 440, a pressure valve 860 and/or an additional bladder 1020 comprising a spring 1030.

For example, a first connection may be used to connect a first bladder to a second bladder in a first row of bladders. A second connection may be used to connect the second bladder in the first row of bladders to a third bladder in the first row of bladders. A first connection may be used to connect a first bladder to a second bladder in a second row of bladders. A second connection may be used to connect the second bladder in the second row of bladders to a third bladder in the second row of bladders. A third connection may be used to connect a bladder of a first row to a bladder of a second row, wherein the bladder in the first row may have the same positional number j as the bladder in the second row. For example, the third connection may be used for connecting a first bladder of a first row to a first bladder of a second row; a second bladder of the first row to a second bladder of the second row, ... , n bladder of the first row to n bladder of the second row. At least one of the first, the second, the third and/or the fourth connection connections may be implemented as a flow-braking device 100 or a flow-braking device 100.

In an example, the pneumatic system 400 may comprise two rows of bladders, each row comprising at least one bladder. In an example, each bladder of each row of bladders may be connected to another bladder via a flow-braking device 100 and/or a flow-braking device 200.

In an example, each row of bladders may comprise an equal number of bladders to form symmetrical rows of bladders (e.g., two symmetrical rows of bladders as illustrated in fig. 4b). The symmetry may be with respect to the connection point between the bladders. In an example, the symmetry may be further associated with the symmetry of a human skeleton such that a first row of bladders corresponds to one side of the human skeleton and a second row of bladders corresponds to the other side of the human skeleton. In an example, symmetry may be associated with a seat of a vehicle, wherein a first row of bladders corresponds to one side of the seat and a second row of bladders corresponds to the other side of the seat. In an example, there may be more than two rows of bladders arranged symmetrically with respect to the central connection point between two bladders, with respect to the center line of a seat of a vehicle and axis of symmetry of a human skeleton.

In an example, the pneumatic system 400 comprising two rows of bladders may be arranged on a seat of the vehicle in a symmetrical manner such that a first row of bladders corresponds to one side of the seat and the second row of bladders corresponds to the other side of the seat.

In an example, the pneumatic system 400 comprising two rows of bladders may be arranged on a seat of the vehicle in a symmetrical manner such that an axis of symmetry of the seat corresponds to an axis of symmetry of the pneumatic system 400.

In an example, the axis of symmetry of the pneumatic system 400 may be defined as a centerline between the two rows of bladders arranged symmetrically with respect to the centerline.

In an example, the two rows of bladders of the pneumatic system 400 may be implemented in seat upholstery of seat cushion and/or seat backrest.

The number of bladders in each row of bladders may be equal to one, as illustrated in fig. 3 and fig. 6a (seat cushion). The number of bladders in each row of bladders may be two to five (e.g., as illustrated in figs. 4, 5 and 6a). In an example, the number of bladders in each row of bladders may be five as illustrated by fig. 6a (seat backrest). In an example, the number of bladders in each row of bladders may be three as illustrated by figs. 4a, 4b, and 5.

In an example, the at least two bladders 410, 412, 414, 418, 416 in the context of fig. 4b may be connected with each other via at least one flow-braking device 100 and/or a flow-braking device 200. A first connection may be implemented by a flow-braking device 100 or a flow-braking device 200. A second connection may be implemented by a flow-braking device 100 or a flow-braking device 200. A third connection may be implemented by a flow-braking device 100 or a flow-braking device 200. A fourth connection may be implemented by a flow-braking device 100 or a flow-braking device 200. In an example, each of the first, the second, the third and/or the fourth connections may be a plurality of a first, a second, a third and a fourth connections such that the at least two bladders 410, 412, 414, 418, 416 form a grid of interconnected bladders comprising at least two rows of bladders each row having at least one bladder.

Each bladder of each row of bladders may have two connections, a first connection (e.g., connection connecting bladder 412 and bladder 418 in fig. 4b) and a second connection (e.g., connection connecting bladder 418 and bladder 416 in fig. 4b).

Each bladder of each row of bladders may have tree connections, a first connection (e.g., connection connecting bladder 412 and bladder 410 in fig. 4b), a second connection (e.g., connection connecting bladder 412 and bladder 418 in fig. 4b) and a third connection (e.g., connection connecting bladder 418 and bladder 416 in fig. 4b).

Each bladder of each row of bladders may have tree connections, a first connection (e.g., connection connecting bladder 412 and bladder 410 in fig. 4b), a second connection (e.g., connection connecting bladder 410, a pump 440 and a proportionate valve 430 in fig. 4b) and a third connection (e.g., connection connecting bladder 410 to a bladder in another row of bladders in fig. 4b).

Each bladder of each row of bladders may have tree connections, a first connection (e.g., connection connecting bladder 412 and bladder 410 in fig. 4b), a second connection (e.g., connection connecting bladder 412 and bladder 418 in fig. 4b), a third connection (e.g., connection connecting bladder 418 and bladder 416 in fig. 4b) and a fourth connection (e.g., for connecting a bladder 410, 412, 414, 418, 416 to an additional bladder 1020 comprising a spring 1030, not shown in fig. 4b).

Some bladders of each row of bladders may have one connection (a first connection), while some other bladders of the same row of bladders may have two connections (a first and a second connection). Some bladders of each row of bladders may have one connection (a first connection), two connections (a first and a second connection) and/or three connections (a first, a second and a third connection).

Pump 440 and proportionate valve 430 are optional in fig. 4b. In case when the pump 440 and the proportionate valve 430 are not present, the pneumatic system in fig. 4b may be referred to as a closed system.

Figures 5 schematically illustrates a pneumatic system 500.

The pneumatic system 500 may be used for seat upholstery of a vehicle. The pneumatic system 500 comprises at least one flow-braking device 100 or flow-braking device 200. The at least one flow-braking device 100 or flow-braking device 200 may comprise features as described in the context of figs. 1, 2 and 3. The pneumatic system 500 further comprises at least two interconnected bladders interconnected by the at least one flow-braking device 100 or flow-braking device 200.

The interconnections may be implemented as in fig. 4a or in fig. 4b. In an example, pneumatic system 500 may comprise two or more rows of bladders. Rows of bladders may be isolated (i.e., not interconnected), as described in the context of fig. 4a. The rows of bladders may be interconnected, e.g., via the third connection, as described in the context of fig. 4b.

In an example, each of the at least two interconnected bladders of the pneumatic system 500 may have one to three connections as described in the context of fig. 4a or may have one to four connections as described in the context of fig. 4b.

In an example, the pneumatic system 500 may be used for a seat cushion. In an example, the pneumatic system 500 may be arranged symmetrical with respect to an axis of symmetry being the central axis 518 of a seat cushion.

In an example, the pneumatic system 500 may be used for a seat backrest. In an example, the pneumatic system 500 may be arranged symmetrical with respect to an axis of symmetry being the central axis 520 of a seat backrest.

In an example, the pneumatic system 500 may comprise at least two bladders for a seat backrest 524.

In an example, the pneumatic system 500 may comprise at least two bladders for a seat cushion 522.

In an example, the pneumatic system 500 may be dynamically inflated and deflated by a pump 440 (not shown in fig. 5) resulting in that the pressure in the at least two bladders of the pneumatic system 500 may be dynamic controlled.

Inflation and deflation of the pneumatic system 500 may be controlled by a controller. The controller may be an electronic controller and/or a computer processor.

The pump 440 may be connected to a proportionate valve 430.

Fig. 5 illustrates bladders being inflated 526 and bladders being deflated 528 dynamically. Dynamic inflation/deflation may repeat in time, as illustrated by time axis 530. Dynamic inflation/deflation may provide posture variation that may be especially advantageous for a human driver or a human passenger during prolonged drives.

Fig. 5 illustrates an example of a predefined pattern for inflation-deflation. For example, fig. 5 illustrates two inflations and two deflations over a period of time along the time axis 530.

Inflation-deflation cycles may repeat with a predefined inflation-deflation pattern or sequence.

For example, the predefined pattern for inflation-deflation for a pneumatic system 500 (or another pneumatic system 300, 400, 600, 800, 1000 of the current disclosure) may be defined by a sequence of steps (a), (b), and (c):

(a) one inflation per first time interval of a left row of bladders and one deflation per the first time interval of a right row of bladders;

(b) one deflation per second time interval of the left row of bladders and one inflation per the second time interval of the right row of bladders;

(c) repeat steps (a) and (b).

Sequence of steps (a), (b), and (c) may provide a simultaneous inflation of one row of bladders and deflation of another row of bladders.

Sequence of steps (a), (b), and (c) may provide mismatched inflation and deflation of one row of bladders and the other row of bladders of a pneumatic system forcing a change of posture of a human driver or a human passenger.

The first and the second time intervals of the sequence of steps (a), (b), and (c) may be the same.

Mismatched inflation and deflation of left and right rows of bladders as described in steps (a)-(c) may be applied to a seat backrest 524 and/or a seat cushion 522.

Mismatched inflation and deflation may be controlled by a controller (e.g., an electronic controller and/or a computer processor) to change pressure in the bladders of a pneumatic system 500 (or any other pneumatic system 300, 400, 600, 800, 1000 of the current disclosure) according to sequence of steps (a), (b), (c) in order to force a change of posture of a human driver or a human passenger.

When applied to a seat backrest, the sequence of steps (a)-(c) may read as follows:

(a) one inflation per first time interval of a left row of bladders of seat backrest and one deflation per the first time interval of a right row of bladders seat backrest;

(b) one deflation per second time interval of the left row of bladders seat backrest and one inflation per the second time interval of the right row of bladders seat backrest;

(c) repeat steps (a) and (b).

When applied to a seat cushion, the sequence of steps (a)-(c) may read as follows:

(a) one inflation per first time interval of a left row of bladders of seat cushion and one deflation per the first time interval of a right row of bladders seat cushion;

(b) one deflation per second time interval of the left row of bladders seat cushion and one inflation per the second time interval of the right row of bladders seat cushion;

(c) repeat steps (a) and (b).

A deflation pattern may be applied to two pneumatic systems, one pneumatic system used for a seat backrest and one pneumatic system used for a seat cushion. The mismatch of inflation and deflation of bladders may be between a row of bladders of a seat backrest and a row of bladders of a seat cushion.

When an inflation deflation is applied to two pneumatic systems (one pneumatic system 500 used for a seat backrest and one pneumatic system 500 used for a seat cushion), the inflation deflation pattern may be defined by a sequence of steps 5001-5005, wherein steps 5001 and 5002 may happen simultaneously, and steps 5003 and 5004 may happen simultaneously.

In the sequence of steps 5001-5005,

step 5001 may comprise one inflation per a fourth time interval of a left row of bladders of a seat cushion and one deflation per the fourth time interval of a left row of bladders of a seat backrest;

step 5002 may comprise one deflation per the fourth time interval of a right row of bladders of the seat cushion and one inflation per the fourth time interval of a right row of bladders of the seat backrest;

step 5003 may comprise one deflation per the fourth time interval of the left row of bladders of the seat cushion and one inflation per the fourth time interval of the left row of bladders of the seat backrest;

step 5004 may comprise one inflation per the fourth time interval of the right row of bladders of the seat cushion and one deflation per the fourth time interval of the right row of bladders of the seat backrest; and

step 5005 may comprise repeating steps 5001-5004 in sequence.

A pneumatic system 500 for a seat backrest may be the same or different to a pneumatic system 500 for a seat cushion. For example, a pneumatic system 500 for a seat backrest may comprise bladders of a seat backrest 524 that may be the same as bladders for a seat cushion 522 of a pneumatic system 500 for a seat cushion. For example, a pneumatic system 500 for a seat backrest may be implemented as pneumatic system 300 and a pneumatic system 500 for a seat cushion may also be implemented as pneumatic system 300.

In another example, a pneumatic system 500 for a seat backrest may be implemented as pneumatic system 400 of variation 400a and a pneumatic system 500 for a seat cushion may also be implemented as pneumatic system 400 of variation 400a.

In another example, a pneumatic system 500 for a seat backrest may be implemented as pneumatic system 400 of variation 400b and a pneumatic system 500 for a seat cushion may also be implemented as pneumatic system 400 of variation 400b.

In another example, a pneumatic system 500 for a seat backrest may be implemented as pneumatic system 400 of variation 400a and a pneumatic system 500 for a seat cushion may be implemented as pneumatic system 400 of variation 400b.

In another example, a pneumatic system 500 for a seat backrest may be implemented as pneumatic system 400 of variation 400b and a pneumatic system 500 for a seat cushion may be implemented as pneumatic system 400 of variation 400a.

In another example, a pneumatic system 500 for a seat backrest may be implemented as pneumatic system 300 and a pneumatic system 500 for a seat cushion may be implemented as pneumatic system 400 of variation 400a or variation 400b.

In another example, a pneumatic system 500 for a seat backrest may be implemented as pneumatic system 400 of variation 400a or variation 400b and a pneumatic system 500 for a seat cushion may be implemented as pneumatic system 300.

In an example, the pneumatic system 500 for a seat backrest may comprise a different number of bladders as compared to the number of bladders of the pneumatic system for the seat cushion.

In another example, the pneumatic system 500 for a seat backrest may comprise the same number of bladders as compared to the number of bladders of the pneumatic system for the seat cushion.

For example, the pneumatic system 500 for a seat backrest may comprise bladders having different size as compared to the size of the bladders of the pneumatic system for the seat cushion.

In another example, the pneumatic system 500 for a seat backrest may comprise bladders having the same size as compared to the size of the bladders of the pneumatic system for the seat cushion.

For example, the pneumatic system 500 for a seat cushion may comprise at least two bladders. In an example, the pneumatic system 500 for a seat cushion may comprise an even number of bladders, e.g., two, four, six, eight, ten bladders, etc., allowing to arrange the bladders symmetrically in two rows.

In an example, a pneumatic system 500 for a seat backrest may comprise at least two bladders. In an example, a pneumatic system 500 for a seat backrest may comprise an even number of bladders, e.g., two, four, six, eight, ten bladders, etc. allowing to arrange the bladders symmetrically in two rows.

A higher number of bladders may provide more uniform pressure distribution.

Inflation and deflation described in the context of fig. 5 may be implemented by an electronic controller or a computer processor configured to operate a pump to inflate and deflate bladders according to the sequence of steps (a), (b), and (c); or the sequence of steps 5001-5005. Analogous to inflating and deflating the bladders of a pneumatic system 500, bladders of pneumatic systems 300, 400, 600, 800 or 1000 may be inflated and deflated according to the sequence of steps (a), (b), (c) or 500-5005. A method of inflating and deflating a pneumatic system 300, 400, 500, 600, 800 or 1000 comprising the sequence of steps (a), (b), (c); or the sequence of steps 5001-5005, may be implemented as a computer implemented method comprising executable instructions for controlling the pump according to the sequence of steps (a), (b), (c); or the sequence of steps 5001-5005.

Figures 6a-6b schematically illustrate a pneumatic system 600.

A pneumatic system 600 may be used for seat upholstery of a vehicle. The pneumatic system 600 comprises at least one flow-braking device 100 or flow-braking device 200. The at least one flow-braking device 100 or flow-braking device 200 may comprise features as described in the context of figs. 1, 2 and 3.

The pneumatic system 600 further comprises at least two bladders 610, 612 interconnected by the at least one flow-braking device 100 or flow-braking device 200.

Figure 6a schematically illustrates a variation 600a of a pneumatic system 600.

A pneumatic system 600 of variation 600a may be used for seat upholstery of a vehicle. The pneumatic system 600 comprises at least one flow-braking device 100 or flow-braking device 200. The at least one flow-braking device 100 or flow-braking device 200 may comprise features as described in the context of figs. 1, 2 and 3.

The pneumatic system 600 of variation 600a further comprises at least two bladders 610, 612 interconnected by the at least one flow-braking device 100 or flow-braking device 200.

The bladders 610 and 612 in fig. 6a may have a rectangular shape.

Pneumatic system 600 of variation 600a may comprise bladders for a seat backrest 624 and/or bladders for a seat cushion 622. Pneumatic system 600 may comprise two pneumatic systems 600, one pneumatic system 600 comprising bladders for a seat backrest 624 and another pneumatic system 600 comprising bladders for a seat cushion 622. Pneumatic system 600 may be inflated and deflated by a pump 440. The inflation and deflation of the pneumatic system 600 may be according to the sequence of steps (a), (b), (c) or according to the sequence of steps 5001-5005 described in the context of fig. 5.

A pneumatic system 600 for a seat backrest may be the same or different to a pneumatic system 600 for a seat cushion. For example, a pneumatic system 600 for a seat backrest may comprise two bladders as illustrated in fig. 6b, while a pneumatic system 600 for a seat cushion may comprise ten bladders. In another example, analogous to the one in fig. 5, a pneumatic system 600 for a seat backrest may comprise the same number of bladders having the same shape, e.g. six bladders for seat cushion 622 and six bladders for seat backrest 624.

Bladders of a seat cushion 622 and a seat backrest 624 of the pneumatic system 600 may have the same, similar, or different shape and/or size. In an example, as illustrated in fig. 6a, bladders of a seat backrest 624 may have similar, i.e., rectangular shape and different size (smaller) as bladders of a seat cushion 622. In another example, bladders of a seat backrest 624 may have the same shape (e.g., square) and the same size as bladders of a seat cushion 622, as for example, illustrated in fig. 5.

Figure 6b schematically illustrates a variation 600b of a pneumatic system 600.

A pneumatic system 600 of variation 600b may be used for seat upholstery of a vehicle. The pneumatic system 600 comprises at least one flow-braking device 100 or flow-braking device 200. The at least one flow-braking device 100 or flow-braking device 200 may comprise features as described in the context of figs. 1, 2 and 3.

The pneumatic system 600 of variation 600b further comprises at least two bladders 610, 612 interconnected by the at least one flow-braking device 100 or flow-braking device 200.

The shape of the bladders 610 and 612 of variation 600b may allow for changing the stiffness of the foam in cushion area. The shape of the bladders 610 and 612 in fig. 6b may be a rectangular shape. Each bladder 610 and 612 may comprise one or more sections, each section having a rectangular shape and having an open end connectable to another (rectangular) section. At least some of the connections between the sections may be implemented via a flow-braking device 100 or flow-braking device 200. Some other connections may be implemented without the flow-braking device, e.g., having an open end. At least some of the connections between the sections may be implemented, e.g., by a proportionate valve 430 or a pressure valve 860. One or more sections may be perpendicular to one or more other sections. One or more sections may be parallel to one or more other sections. One or more sections may be parallel to one or more other sections and one or more sections may be perpendicular to one or more other sections. In other words, bladders 610, 612 may have an "E" shape, each line in "E" forming a sub-section.

For example, pneumatic system 600 of variation 600b may comprise two bladders, bladder 610 and bladder 612. Each bladder 610 and 612 may comprise four sections ("E" shape) connected to each other so that all four sections form an interconnected inner space. The three sections of said four sections may be parallel to each other and the three parallel sections may be perpendicular to the fourth section. Each of the three parallel sections may comprise at least two sub sections connected by the flow-braking device 100 or flow-braking device 200, and, optionally, a pressure valve 860. Each bladder 610 and 612 may be additionally connected to a pump 440 and a proportionate valve 430.

For example, each of the three parallel sub sections of the "E" shape in fig. 6b may be split in the middle into two sub sections that may be interconnected by the flow-braking device 100 or flow-braking device 200 and, optionally, a pressure valve 860. In another example, each of the three parallel sub sections in fig. 6b may be split into more than two sub sections that may be interconnected by the flow-braking device 100 or flow-braking device 200 and, optionally, a pressure valve 860.

One technical advantage of higher number of bladders or sub sections in bladders interconnected by a flow-braking device 100 or a flow-braking device 200 may relate to higher pressure resolution and hence more comfort. Yet it may be more costly to produce more bladders because of the welding process needed and the number of tube connections and flow-braking devices needed in between the bladders. Therefore, there may be a tradeoff between the resolution and manufacturing cost. In an example, there may be between two and ten bladders to provide an advantageous resolution at a reasonable cost.

The pneumatic system 600 may be arranged on a seat of a vehicle 640 as illustrated in figs. 6a and 6b.

In an example, the pneumatic system 600 may be arranged on a seat cushion or a seat backrest.

In an example, the pneumatic system 600 may be arranged symmetrically with respect to a central axis of a seat cushion and/or a central axis of a seat backrest.

In an example, the pneumatic system 600 may comprise bladders of a seat backrest.

In an example, the pneumatic system 600 may comprise bladders of a seat cushion.

In an example, the pneumatic system 600 may comprise two pneumatic systems 600, one pneumatic system 600 comprising bladders of a seat backrest and one pneumatic system 600 comprising bladders of a seat cushion.

A pneumatic system 600 may be connectable to a pump 440. In an example, pneumatic system 600 may comprise a pump 440 (not shown in fig. 6). The pump 440 may provide inflation and deflation for posture variation especially advantageous for prolonged drives for a human driver or a human passenger. The inflation and deflation of the pneumatic system 600 may be according to the sequence of steps (a), (b), (c) or according to the sequence of steps 5001-5005 described in the context of fig. 5. One row of bladders may comprise a bladder 610 having an "E" shape and another row of bladders may comprise a bladder 612 having an "E" shape.

As illustrated in fig. 6b, a pneumatic system 600 for a seat backrest (having four rows of prolongated bladders) may be different to a pneumatic system 600 for a seat cushion (having two rows of bladders having an "E" shape). As illustrated in fig. 6b, the pneumatic system 600 for a seat backrest may comprise a different number of bladders having a different shape (e.g., four rectangular bladders) as compared to the number and shape of bladders of the pneumatic system for a seat cushion (e.g., two bladders 610, 612, each having an "E" shape).

Fig. 6b illustrates bladders 610 being inflated during an inflation cycle 626 providing a higher pressure to one hip (buttock) of a human passenger or driver and bladders 612 being deflated during a deflation cycle 628 providing a lower pressure to one hip (buttock) of a human passenger or driver. The lower pressure may be provided to one hip (buttock), e.g., left, and the higher pressure may be provided to another hip (buttock), e.g., right. In a subsequent cycle the lower and the higher pressures may swap from left to right to vary the posture of the human passenger or the human driver.

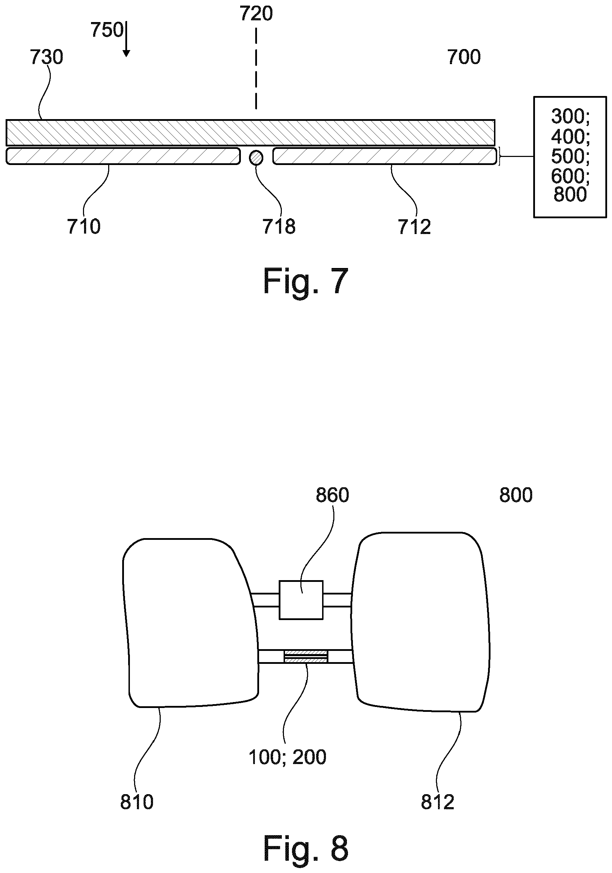

Figure 7 schematically illustrates a seat component 700 for a vehicle.

The seat component 700 comprises a pneumatic system 300, 400, 500, 600, 800 or 1000. The pneumatic system 300, 400, 500, 600, 800 or 1000 may comprise features as described in the context of figs. 3, 4, 5, 6, 8 and 10. The seat component 700 further comprises a layer of foam 730. The layer of foam 730 is arranged above the at least two bladders 310, 312; 410, 412, 414, 416, 418; 526, 528; 610, 612; 710, 712; 810, 812; 1010, 1020 of the pneumatic system 300, 400, 500, 600, 800 or 1000 when the layer of foam 730 is viewed in the direction 750 of gravity force when the seat component is for bladders of a seat cushion 622 or when the layer of foam 730 is viewed in a front-to-back direction along the centerline of the vehicle when the seat component is for a seat backrest.

In an example, the layer of foam 730 may have a thickness equal to or less than 50 mm.

In an example, the layer of foam 730 may have a thickness down to 5 mm.

In an example, the layer of foam 730 may have a thickness in a range between 50 mm and 5 mm.

In an example, the layer of foam 730 may have a thickness in a range between 10 mm and 30 mm.

In an example, the layer of foam 730 for a seat backrest may have a thickness up to 30 mm and the layer of foam 730 for a seat cushion may have a thickness up to 50 mm.

In an example, the layer of foam 730 for a seat backrest may have a thickness down to 5 mm and the layer of foam 730 for a seat cushion may have a thickness down to 5 mm.

In an example, the layer of foam 730 for a seat backrest may have a thickness in a range between 50 mm and 5 mm and the layer of foam 730 for a seat cushion may have a thickness in a range between 50 mm and 5 mm.

In an example, the layer of foam 730 for a seat backrest may have a thickness in a range between 10 mm and 30 mm and the layer of foam 730 for a seat cushion may have a thickness in a range between 10 mm and 30 mm.

In an example, the layer of foam 730 for a seat backrest may have a thickness equal to or less than 50 mm and the layer of foam 730 for a seat cushion may have a thickness equal to or less than 50 mm.

Said ranges of the layer of foam 730, (i.e., the thickness equal to or less than 50 mm; down to 5 mm; between 50 mm and 5 mm; between 10 mm and 30 mm) may provide an optimal level of comfort for a seat of a vehicle 640 of a vehicle, while, at the same time, allowing to reduce environmental impact for manufacturing seat upholstery.

The flow-braking device 100, 200 of the pneumatic system 300, 400, 500, 600, 800 or 1000 allows for reducing the layer of foam 730 for providing the same layer of comfort as a thicker layer of foam when used without the flow-braking device 100, 200. Reduced layer of foam, in turn, allows to reduce environmental impact when manufacturing seat upholstery for a vehicle.

For example, if a layer of foam has a thickness between 60mm and 100mm providing a predefined level of comfort, the same predefined level of comfort, or even better level of comfort, may be achieved by a layer of foam 730 having a thickness between 30 mm and 50 mm, and being combined with the flow-braking device 100, 200 of the pneumatic system 300, 400, 500, 600, 800 or 1000. A thicker layer of foam 730 may be used depending on the cushion area. For example, more thickness may be required for a seat cushion since there is more pressure than at the seat backrest. Thus, a layer of foam 730 having a thickness of 50 mm may be used for the seat cushion and a layer of foam 730 having a thickness of 30 mm may be used for the seat backrest.

In other words, the flow-braking device 100, 200 of the pneumatic system 300, 400, 500, 600, 800 or 1000 may allow to reduce the thickness of a conventional layer of foam by two times or more. For example, the combination of a layer of foam 730 with the pneumatic system 300, 400, 500, 600, 800 or 1000 may allow to reduce the thickness of the layer of foam down to 5 mm (without compromising the comfort level).

In an example, the seat component 700 may be used for a seat cushion. In an example, the seat component 700 may be arranged symmetrical with respect to an axis of symmetry being the central axis 718 of a seat cushion.

In an example, the seat component 700 may be used for a seat backrest. In an example, the seat component 700 may be arranged symmetrical with respect to an axis of symmetry being the central axis 720 of a seat backrest.

In an example, the seat component 700 may comprise at least two bladders for a seat backrest.

In an example, the seat component 700 may comprise at least two bladders for a seat cushion.

The seat component 700 may be used for a seat backrest and/or a seat cushion.

In an example, the seat component 700 may comprise identical pneumatic system when the seat component is for a seat cushion and when the seat component is for a seat backrest, e.g., as pneumatic systems illustrated in fig. 5.

In another example, the seat component 700 may comprise a different pneumatic system when the seat component is for a seat cushion and when the seat component is for a seat backrest, e.g., as pneumatic systems illustrated in figs. 6a and 6b.

In an example, the seat component 700 may comprise a different thickness of the layer of foam 730 when the seat component is for a seat cushion and when the seat component is for a seat backrest, e.g., less thickness for the seat backrest.

The bladders 710 and 712 of the seat component 700 may be inflated and deflated according to the sequence of steps (a), (b), (c) or according to the sequence of steps 5001-5005 as described in context of figs. 5, 6a and 6b.

Figure 8 schematically illustrates a pneumatic system 800.

The pneumatic system 800 may be used for seat upholstery of a vehicle. The pneumatic system 800 system comprises at least one flow-braking device 100 or flow-braking device 200. The flow-braking device 100 or flow-braking device 200 may comprise features as described in the context of figs. 1, 2 and 3. The pneumatic system 800 system further comprises at least two bladders 810, 812 interconnected by the at least one flow-braking device 100 or flow-braking device 200.

The pneumatic system 800 system may further comprise a pressure valve 860. The pressure valve 860 may be provided as an additional connection between the at least two bladders 810, 812 of the pneumatic system 800 (i.e., in addition to the connection provided by the flow-braking device 100 or flow-braking device 200). A technical advantage provided by the pressure valve 860 may be an additional control of the fluid flow between the at least two bladders 810, 812.

The pressure valve 860 may provide even more precise control of the fluid flow improving the level of comfort for a seat of a vehicle even further.

In an example, a pneumatic system 300, 400, 500, 600, 800 or 1000 may be a closed system. In this example, an inner space of the at least two bladders of the pneumatic system 300, 400, 500, 600, 800 or 1000 and the channel of the at least one flow-braking device 100 or flow-braking device 200 may be configured as a closed space having a predefined pressure.

In this example, the closed space can provide an advantage that the pneumatic system 300, 400, 500, 600, 800 or 1000 may be a leak free pneumatic system. Another advantage may be the possibility to set a pressure of the internal space at a predetermined level during manufacturing of the pneumatic system. This predetermined pressure may remain unchanged after the pneumatic system is manufactured (i.e., providing leak free system).

In another example, a pneumatic system 300, 400, 500, 600, 800 or 1000 may be an open system. In this example, the pneumatic system 300, 400, 500, 600, 800 or 1000 may comprise an inner space defined by the inner space of the at least two bladders and the channel of the at least one flow-braking device. The inner space may be configured as an open space connectable to a pump 440 for controllable inflation and/or deflation after the pneumatic system is manufactured.

A pump 440, as illustrated in fig. 4, is optional for a pneumatic system 300, 400, 500, 600, 800 or 1000 described in the context of figs. 3, 4, 5, 6, 7, 8, 10. When the pump 440 is connectable to the pneumatic system, the pneumatic system may be referred to as an open system.

In an example, a proportionate valve 430, as illustrated in fig. 4, is optional for a pneumatic system 300, 400, 500, 600, 800 or 1000 described in the context of figs. 3, 4, 5, 6, 7, 8, 10.

The pump 440 and the proportionate valve 430 (not shown in figs. 3, 5, 6, 7, 8, 10) may be combined with any pneumatic system 300, 500, 600, 800 and/or 1000.

A technical advantage of the open system (i.e., a pneumatic system 300, 400, 500, 600, 800 or 1000 connectable to a pump 440) may be the possibility of adjusting comfort levels after the pneumatic system is manufactured.

Another technical advantage of the open system (i.e., a pneumatic system 300, 400, 500, 600, 800 or 1000 connectable to a pump 440) may be adaptive cushioning. Adaptive cushioning may provide varied pressure levels of pressure adjustable during driving. Dynamic posture changes may be achieved during driving by adjusting pressure levels. Dynamic posture changes may be especially advantageous for prolonged drives. Adaptive cushioning may refer to inflation and deflation of the one or more bladders by a pump according to a pattern or sequence of steps. Said inflation and deflation may be controlled by an electronic controller and/or a computer processor. The inflation and deflation may be carried out according to a sequence of steps (a), (b), (c) or 5001-5005, as described in the context of figs. 5, 6a, and 6b.

The inflation and deflation defined by the sequence of steps (a), (b), (c) or 5001-5005 may comprise inflating bladders to a predetermined inflation pressure and deflating the bladders to a predetermined deflation pressure. The predetermined inflation and deflation pressures may be above zero.

A further advantage of the open system (i.e., a pneumatic system 300, 400, 500, 600, 800 or 1000 connectable to a pump 440) may be such that, in case of leaks, the leaks may be compensated for by providing compensable pressure by pumping an additional fluid by the pump 440.

Figures 9a-9b schematically illustrate possible ranges of the flow rate of a fluid through a channel of a flow-braking device 100 or flow-braking device 200.

In an example, the channel of the flow-braking device 100 or flow-braking device 200 may be configured to provide a flow rate of the fluid flow in a range of up to 10 liters per minute.

In an example, the channel of the flow-braking device 100 or flow-braking device 200 may be configured to provide a flow rate of the fluid flow in a range between 0,1 and 2,0 liters per minute.

In an example, the channel of the flow-braking device 100 or flow-braking device 200 may be configured to provide a flow rate of the fluid flow in a range between 0,02 liters per minute and 0,15 liters per minute.

In one or more examples, the channel may be configured to provide said ranges of the flow rate by having a certain diameter or width and a certain length. A flow rate may be calculated or simulated for one or more diameter values at a predefined length or for one or more length values at a predefined diameter or width.

A flow rate through a channel of the flow-braking device 100 or flow-braking device 200 may be measured in accordance with ISO 5167-1:2022(en) standards directed at measurement of fluid flow by means of pressure differential devices inserted in circular cross-section conduits running full (see section 3.3.1.2, "volume flow rate".

Figs. 9a and 9b show possible flow rates for a channel having varied diameters or width and a fixed length (fig. 9a) or channel having a varied length at a fixed diameter or width (fig. 9b). In context of figs. 9a and 9b, a diameter value in case of a channel having a circular cross section may correspond to a width value in case of a channel having a rectangular or square cross section.

Figure 9a schematically illustrates a possible range of the flow rate of a fluid as a function of a diameter or width at a fixed length of a channel of a flow-braking device 100 or flow-braking device 200.

Figure 9b schematically illustrates a possible range of the flow rate of a fluid as a function of a length at a fixed diameter or width of a channel of a flow-braking device 100 or flow-braking device 200.

The flow rates, as illustrated in figs. 9a and 9b, may be simulated or calculated for a channel length at a fixed width or diameter, or for a diameter or width at a fixed channel length. The simulation results, such as the one illustrated in figs. 9a and 9b, may be verified via a measurement in accordance with standards ISO 5167-1:2022(en), section 3.3.1.2.

The measurement of the flow rates for the channel length and diameters illustrated in figs. 9a and 9b were carried out at room temperature (i.e., 20 °C) and pressure at 465 Pa, in accordance with standards ISO 5167-1:2022(en), section 3.3.1.2. The simulated curves in figs. 9a and 9b were in agreement with the measurement results. The fluid in the measurement and simulation was air.

The simulation may comprise FEM (Finite-Element-Method) computational fluid dynamics simulation. The calculation may comprise equations 901-907 associated with the FEM simulation.

From the simulations, calculations and measurements, the following advantageous geometries for the channel (i.e., diameter/width and a length of the channel) were determined.

In an example, the channel may be configured to provide the flow rate of the fluid flow in the range between 0,1 and 2 liters per minute by having a channel diameter or width in a range between 0,4 mm and 1,5mm and a channel length in a range between 0,5mm and 29,5mm, or preferably, the channel length equal to 2,6 mm.

In an example, the channel may be configured to provide the flow rate of the fluid flow in the range between 0,02 liters per minute and 0,15 liters per minute by having the channel diameter or width equal to 0,4 mm and the channel length in a range between 0,5mm up to 29,5 mm.

In an example, the channel may be configured to provide a flow rate of the fluid flow in a range between 0,3 liters per minute and 0,6 liters per minute by having the channel diameter or width equal to 0,8 mm and the channel length in a range between 0,5mm up to 29,5 mm.

In an example, the channel may be configured to provide a flow rate of the fluid flow in a range between 1,85 liters per minute and 2,25 liters per minute by having the channel diameter or width equal to 1,5 mm and the channel length in a range between 0,5mm up to 29,5mm.

One technical advantage of the above examples of channel length and width or dimeter may relate to manufacturing. Another advantage may relate to providing suitable pressures and flow rates for the pneumatic system of the current disclosure.

For example, a diameter (or width) of the channel, for manufacturing reasons, may be easier to adjust than a length of the channel longer than 30mm (due to a very thin and long needle / drill needed). Thus, it may be advantageous, for manufacturing reasons, to have a length of the channel below 30 mm. However, a length of the channel longer than 30 mm may still be manufactured when it is advantageous in other aspects, e.g., for the arrangement of the bladders on a seat of a vehicle. In that case, the channel diameter or width may be adjusted to a longer length, according to equations 901-907 or by the FEM simulation.

The above ranges and values for the channel diameters/width and the channel length and corresponding flow rates are merely examples. Further values for channel length and width/diameter are withing the scope. Further combinations for channel length and width/diameter may be derived from the simulations and equations 901-907 associated with the FEM simulation described in detail below.

The curves, such as the ones illustrated by figs. 9a and 9b, may be simulated by an FEM (Finite-Element-Method) computational fluid dynamics simulation. However, more generally, since the cross section of the channel may be small in some example (i.e., up to 2 mm,) and the inner surface of the channel may be smooth (i.e., such that a laminar flow of fluid may be established in the channel), a laminar flow can be assumed.

When a laminar flow may be assumed, the flow in the narrow area through the flowing element (i.e., channel of the flow-braking device) can be calculated by using equation 901:

$$Q = \frac{(\pi.D^2)}{4} \cdot \sqrt{\left(\frac{2.(P_1 - P2)}{\rho}\right)}, \text{ (equation 901).}$$

Equation 901 may relate the volumetric flow rate of air (or other fluid) through a channel to the diameter of the channel and the pressure difference between the two ends of the channel.

For example, the flow rate of air through a channel can be calculated using the volumetric flow rate Q given by equation 902:

$$Q = A \cdot V, \text{ (equation 902).}$$

In equation 902, Q is the volumetric flow rate (in cubic meters per second, for example); A is the cross-sectional area of the channel (in square meters, for example); V is the average velocity of air through the channel (in meters per second, for example).

The cross-sectional area (A) of the channel can be calculated using an equation 903 for, e.g., an area of a circle, if the channel has a circular cross section:

$$A = \frac{(\pi \cdot D^2)}{4}, \text{ (equation 903).}$$

In equation 903, D is the diameter of the channel (e.g., in meters). Combining these two equations, 903 and 902, the flow rate (Q) may be provided as a function of the diameter (D) of the channel by equation 904:

$$Q = \frac{\pi \cdot D^2}{4} \cdot V, \text{ (equation 904)}.$$

The relationship between velocity (V) and pressure (P) may be incorporated by considering the Bernoulli's equation, which relates the pressure, velocity, and elevation of fluid flow. For an incompressible, steady flow of air through a channel, Bernoulli's equation can be expressed by equation 905:

$$P + \frac{1}{2}\rho V^2 + \rho g h = c\,ons, \text{ (equation 905)}.$$

In equation 905, P is the pressure of the air; $\rho$ is the density of the air; V is the velocity of the air; g is the acceleration due to gravity; h is the height of the channel above some reference point.

Assuming the channel may be horizontal (resulting in h being constant) and that the air density may be constant, the Bernoulli's equation 905 may be rearranged to express velocity (V) as a function of pressure (P) in equation 906:

$$V = \sqrt{\frac{2.(P1-P2)}{\rho}}, \text{ (equation 906)}.$$

In equation 906, P1 is the pressure at one end of the channel; P2 is the pressure at the other end of the channel.

Equation 906 may be substituted for velocity into the volumetric flow rate described by equation 902.

By substituting the values that were used in the FEM simulations, such as illustrated in figs. 9a and 9b, e.g., P1-P2=465, a theoretical graph (X Axis is radius, Y Axis is flow rate in L/min) may be obtained that may allow to obtain a radius of the channel (or half width of the channel) for a predefined flow rate Q from the equation 907:

$$Q = \frac{\left( \frac{\pi \cdot \left( 2 \cdot \left( \frac{r}{1000} \right) \right)^2}{4} \cdot \sqrt{\frac{2 \cdot 465}{1.224}} \right)}{0.000020417}, \text{ (equation 907)}.$$

A dimeter of the channel may be obtained as two times radius. A width of the channel may be obtained as two times half width.

In equation 907, value 465 is the pressure difference and value 0,000020417 is the conversion multiplier from L/min to Kg/s for a fluid that is air.

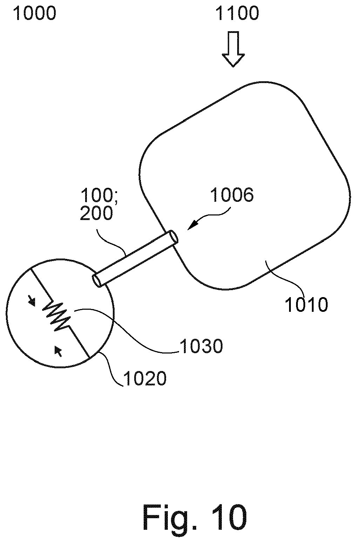

Figure 10 schematically illustrates a pneumatic system 1000 comprising an additional bladder having a spring.

The pneumatic system 1000 may be used for seat upholstery of a vehicle, The pneumatic system 1000 comprises at least one flow-braking device 100 or flow-braking device 200. The pneumatic system 1000 further comprises at least two bladders 1010 interconnected by the at least one flow-braking device 100 or flow-braking device 200.

The pneumatic system 1000 may comprise at least one additional bladder 1020 having a spring 1030. In fig. 10, the additional bladder 1020 is connected to one of the at least two bladder 1010 via a flow-braking device 100 or flow-braking device 200. The at least two bladders 1010 may comprise features similar to the of the ones described in the context of figs. 3, 4, 5, 6, 7, 8 (bladders 310, 312; 410, 412, 414, 416, 418; 522, 524, 526, 528; 610, 612; 710, 712; 810, 812).

Each additional bladder 1020 may have a spring 1030. Each additional bladder 1020 may be connected to at least one of the at least two interconnected bladders by at least one additional flow-braking device. The at least one additional flow-braking device may be a flow-braking device 100 or flow-braking device 200. The flow-braking device 100 or flow-braking device 200 may comprise features as described in the context of figs. 1, 2 and 3.

The additional bladder 1020, due to the spring 1030, may provide a shock absorbing effect for cushioning of a seat component 700. The spring 1030 may increase elasticity of a bladder resulting in a more elastic bladder, i.e., the additional bladder 1020. When an external sudden force 1100 is applied to the bladders 1010 and the additional bladder 1020, this sudden force 110 may push fluid of the bladders 1010 into the additional bladder 1020 for a period of time until the shock is absorbed by the spring 1030. After the shock is absorbed by the spring 1030, the spring 1030 may force the fluid back to the bladders 1010. Thus, the additional bladder 1020 may be referred to as a more elastic bladder as compared to the bladder 1010 because the additional bladder 1020 may be compressed by the spring 1030 providing additional elasticity.

Pneumatic system 1000 may be especially advantageous for cushioning of a seat component 700 as the fluid can escape from bladders 1010 having a higher pressure to bladders 1010 having a lower pressure via a flow-braking device 100 or flow-braking device 200, and in addition to that, the fluid can also escape from bladders 1010 having a higher pressure to the additional bladder 1020 having a lower pressure via a flow-braking device 100 or flow-braking device 200. In addition to the flow-braking device 100 or flow-braking device 200, the spring 1030 of the additional bladder 1020 can further compensate the higher pressure by the elasticity of the spring 1030 ensuring that the pressure in bladders 1010 does not exceed a predefined threshold. The additional bladder 1020 comprising the spring 1030 may allow to set the predefined threshold of pressure. The predefined threshold of pressure may correspond to the spring force of the bladder.

The at least two bladders described in the context of fig. 10 may be connected to a pump 440 and a proportionate valve 430 and proportionate valve 430 as illustrated in fig. 4a or 4b.

The bladders described in the context of fig. 10 may be inflated and deflated according to a sequence of steps (a), (b), (c) or a sequence of steps 5001-5005. In this case, one row of bladders may comprise one or more bladders 1010 and another row of bladders may comprise one or more bladders 1010. The one or more bladders 1010 may be connected analogous to bladders in figs. 4a or 4b to form at least two rows of bladders 1010. In addition to the connections described in the context of fig. 4a or fig. 4b, at least one bladder 1010 in each row of bladders may be connected to at least one additional bladder 1020 via a fifth connection implemented by a flow-braking device 100 or a flow-braking device 200.

Each of the pneumatic systems 300, 400, 500, 600, 800 or 1000 may comprise a plurality of flow-braking devices 100 and/or 200 for connecting the at least two bladders and, optionally, for connecting additional components, e.g., a proportionate valve 430, a pump, a pressure valve 860, an additional bladder 1020 comprising a spring 1030. For example, at least one flow-braking device 100 or 200 may be used for connecting the at least two bladders between themselves and a flow-braking device 100 or 200 may be used for connecting at least one of the at least two bladders to a proportionate valve 430 and a pump 440. In another example, three flow-braking devices 100 and/or 200 may be used for connecting at least two bladders between themselves, connecting at least one from the at least two bladders to a proportionate valve 430 and a pump 440, and for connecting at least one from the at least two bladders to at least one additional bladder 1020 or connecting at least one from the at least two bladders to a pressure valve 860.

One connection of a pneumatic system 300, 400, 500, 600, 800 or 1000 may be implemented via a flow-braking device 100 and another connection may be implemented via a flow-braking device 200. For example, the at least two bladders 1010 may be connected by a flow-braking device 100 (or 200), and the additional bladder 1020 may be connected to at least one of the at least two bladders by a flow-braking device 200 (or 100).

The description of embodiments has been presented for purposes of illustration and description. Suitable modifications and variations to the embodiments may be performed in light of the above description or may be acquired from practicing the methods.

The described systems are exemplary in nature, and may include additional elements and/or omit elements. The subject matter of the present disclosure includes all novel and non-obvious combinations and sub-combinations of the various systems and configurations, and other features, functions, and/or properties disclosed.

As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The following claims particularly point out subject matter from the above disclosure that is regarded as novel and non-obvious.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, elements, or other physical or functional units shown in the drawings or described herein may also be implemented by an indirect connection or coupling. A coupling between components may also be established over a wireless connection.

For example, dynamic control described in the context of fig. 5 for inflating and deflating the pneumatic system 500 by a pump 440 may be carried out via a communication interface implemented via a direct (hardware connection) or indirect (wireless connection).

Functional blocks of the current disclosure may be implemented in hardware, firmware, software, or a combination thereof.

The features described in the context of figs. 1-10 are combinable unless otherwise is directly and unambiguously disclosed in the current disclosure.

In view of the above disclosure, the following general conclusions may be drawn.

A flow-braking device for a pneumatic system and a seat component for a vehicle is provided.

A flow-braking device comprises a solid body for connecting at least two bladders. The solid body comprises a channel extending through the solid body from one bladder to another bladder for transmitting a fluid between the at least two bladders. The channel is configured to control fluid movement between the at least two bladders by restricting a flow of the fluid flowing in a direction from a bladder having a higher pressure to a bladder having a lower pressure for controllable deflation of the bladder having the higher pressure.

The pneumatic system comprises a flow-braking device and at least two bladders interconnected by the flow-braking device.

The seat component for a vehicle comprises the pneumatic system and a layer of foam.

The flow-braking device may allow to reduce the thickness of the layer of foam used in seat upholstery of a vehicle for cushioning.

Reduced thickness of the layer of foam in turn may allow to reduce environmental impact induced by producing seat upholstery of a vehicle.

**Reference numerals**

100; 200: a flow-braking device;

100a; 100b; 100c: a variation of a flow-braking device 100;

200a; 200b; 200c: a variation of a flow-braking device 200;

300; 400; 500; 600; 800; 1000: a pneumatic system;

400a; 400b: a variation of pneumatic system 400;

600a; 600b: a variation of pneumatic system 600;

700: a seat component;

102; 102a; 102b; 102c; 202; 302: a solid body;

102a: a hollow cylinder;

102b; 102c: a solid cylinder;

202; 302: a flat-sided solid;

104; 104a; 104b; 104c; 204; 304: a channel;

104a: a cylinder's hollow;

104b; 104c: a recession;

310, 312; 410, 412, 414, 416, 418; 522, 524, 526, 528; 610, 612; 710, 712; 810, 812; 1010: bladders;

320: welding areas;

206; 306; 1006: a direction of a fluid flow from a bladder having a higher pressure;

208; 308: a direction of a fluid flow to a bladder having a lower pressure;

640: a seat of a vehicle;

430: a proportionate valve;

440: a pump;

518; 618; 718: a central axis of a seat cushion;

520; 620; 720: a central axis of a seat backrest;

524; 624: bladders of a seat backrest;

522; 622: bladders of a seat cushion;

526; 610: bladders being inflated;

528; 612: bladders being deflated;

530: a time axis;

626: inflation cycle;

628: deflation cycle;

730: a layer of foam;

750: a viewing direction, direction of gravity force;

860: a pressure valve;

1100: external shock force;

1020: an additional bladder having a spring;

1030: a spring.

## Claims

1. A flow-braking device (100; 200), the flow-braking device comprising:
   a solid body (102; 202; 302) for connecting at least two bladders (310, 312; 410, 412, 414, 416, 418; 526, 528; 610, 612; 710, 712; 810, 812; 1010, 1020), the solid body (102; 202; 302) comprising:

   a channel (104; 204; 304) extending through the solid body (102; 202; 302) from one bladder (310; 410, 414, 416; 522; 524; 610; 710; 810) to another bladder (312; 412, 414, 418; 522; 524; 612; 712; 812) for transmitting a fluid between the at least two bladders,
   wherein the channel is configured to control fluid movement between the at least two bladders by restricting a flow of the fluid flowing in a direction from a bladder having a higher pressure (206; 306; 1006) to a bladder having a lower pressure (208; 308) for controllable deflation of the bladder having the higher pressure.

2. The flow-braking device (100; 200) of claim 1, wherein the channel is configured to provide a fluid flow suitable for a pneumatic system (300; 400; 500; 600; 800) for cushioning of a seat of a vehicle (640).

3. The flow-braking device (100; 200) of claim 1 or 2, wherein the channel is configured to provide a flow rate of the fluid flow in a range of up to 10 liters per minute, or preferably, in a range between 0,1 and 2,0 liters per minute, or more preferably, in a range between 0,02 liters per minute and 0,15 liters per minute.

4. The flow-braking device (100; 200) of claim 3,

   wherein the channel is configured to provide the flow rate of the fluid flow in the range between 0,1 and 2 liters per minute by having a channel diameter or width in a range between 0,4 mm and 1,5mm and a channel length in a range between 0,5mm and 29,5mm, or preferably, the channel length equal to 2,6 mm;
   wherein the channel is configured to provide the flow rate of the fluid flow in the range between 0,02 liters per minute and 0,15 liters per minute by having the channel diameter or width equal to 0,4 mm and the channel length in a range between 0,5mm up to 29,5 mm;
   wherein the channel is configured to provide a flow rate of the fluid flow in a range between 0,3 liters per minute and 0,6 liters per minute by having the channel diameter or width equal to 0,8 mm and the channel length in a range between 0,5mm up to 29,5 mm; or
wherein the channel is configured to provide a flow rate of the fluid flow in a range between 1,85 liters per minute and 2,25 liters per minute by having the channel diameter or width equal to 1,5 mm and the channel length in a range between 0,5mm up to 29,5mm.

5. The flow-braking device (100) of any one of claims 1-4,

wherein the solid body (102) is a hollow cylinder (102a), and
wherein the channel (104) is provided by a cylinder's hollow (104a).

6. The flow-braking device (100) of claim 5, wherein the cylinder's hollow (104a) is arranged along the central axis of the hollow cylinder (102a),
preferably, wherein the cylinder's hollow has a circular cross section perpendicular to the central axis of the hollow cylinder (102a).

7. The flow-braking device (100) of any one of claims 1-4, wherein the solid body (102) is a solid cylinder (102b; 102c) and wherein the channel (104) is provided as a recession (104b; 104c) embedded into the lateral side of the solid cylinder (102b; 102c).

8. The flow-braking device (100) of claim 7, wherein the recession (104b) extends along a straight line perpendicular to the end faces of the solid cylinder (102b), or wherein the recession (104c) extends along a curved line between the end faces of the solid cylinder (102c), preferably, wherein the curved line is a helical line spiraling around the solid cylinder (102c).

9. The flow-braking device (200) of any one of claims 1-4, wherein the solid body is a flat-sided solid (202; 302) having an upper side and a lower side extending between the at least two bladders (310, 312), wherein the channel (204; 304) is provided by welding the channel in the flat-sided solid (202; 302) between the at least two bladders and between the upper and the lower sides of the flat-sided solid (202; 302),
preferably, wherein the channel (204; 304) is welded along a curved (204a) and/or an angled (204b; 204c) line for providing fluid turbulence in the channel.

10. The flow-braking device (100; 200) of any one of claims 1-9, further comprising a proportionate valve (430) comprising an adjustable opening for regulating an opening of the channel thereby regulating the flow rate of the fluid.

11. A pneumatic system (300; 400; 500; 600; 800; 1000) for seat upholstery of a vehicle, the pneumatic system comprising:

at least one flow-braking device (100; 200) of any one of claims 1-10 and
at least two bladders (310, 312; 410, 412, 414, 416, 418; 526, 528; 610, 612; 710, 712; 810, 812; 1010, 1020) interconnected by the at least one flow-braking device.

12. The pneumatic system (300; 400; 500; 600; 800; 1000) of claim 11, wherein an inner space of the at least two bladders and the channel of the at least one flow-braking device is configured as a closed space having a predefined pressure.

13. The pneumatic system (300; 400; 500; 600; 800; 1000) of claim 11, wherein an inner space of the at least two bladders and the channel of the at least one flow-braking device is configured as an open system connectable to a pump (440).

14. The pneumatic system (1000) of any one of claims 11 to 13, further comprising at least one additional bladder (1020), each additional bladder (1020) having a spring (1030), and each additional bladder (1020) being connected to at least one of the at least two bladders (310, 312; 410, 412, 414, 416, 418; 526, 528; 610, 612; 710, 712; 810, 812; 1010, 1020) by at least one additional flow-braking device, wherein the at least one additional flow-braking device is the flow-braking device (100; 200) of any one of claims 1-10.

15. A seat component (700) for a vehicle comprising:

the pneumatic system (300; 400; 500; 600; 800; 1000) of any one of claims 11-14 and
a layer of foam (730), wherein the layer of foam (730) is arranged above the at least two bladders (310, 312; 410, 412, 414, 416, 418; 526, 528; 610, 612; 710, 712; 810, 812; 1010, 1020) when the layer of foam (730) is viewed in the direction (750) of gravity force when the seat component is for a seat cushion or when the layer of foam (730) is viewed in a front-to-back direction along the centerline of the vehicle when the seat component is for a seat backrest,

preferably, wherein the layer of foam (730) has a thickness equal to or less than 50 mm, or more preferably wherein the layer of foam has a thickness in a range between 50 mm and 5 mm, or in a range between 10 mm and 30 mm.

**Amended claims in accordance with Rule 137(2) EPC.**

1.   A flow-braking device (100; 200), the flow-braking device comprising:
a solid body (102; 202; 302) for connecting at least two bladders (310, 312; 410, 412, 414, 416, 418; 526, 528; 610, 612; 710, 712; 810, 812; 1010, 1020), the solid body (102; 202; 302) comprising:

a channel (104; 204; 304) extending through the solid body (102; 202; 302) from one bladder (310; 410, 414, 416; 522; 524; 610; 710; 810) to another bladder (312; 412, 414, 418; 522; 524; 612; 712; 812) for transmitting a fluid between the at least two bladders,
wherein the channel is configured to control fluid movement between the at least two bladders by restricting a flow of the fluid flowing in a direction from a bladder having a higher pressure (206; 306; 1006) to a bladder having a lower pressure (208; 308) for controllable deflation of the bladder having the higher pressure and wherein the channel is configured to control the deflation when the higher pressure and the lower pressure swap sides by deflating a bladder having the higher pressure into a bladder having the lower pressure,
and wherein the channel is configured to provide a predefined flow rate of fluid flow by having a certain channel diameter or width and a certain channel length.

2.   The flow-braking device (100; 200) of claim 1, wherein the channel is configured to provide a fluid flow suitable for a pneumatic system (300; 400; 500; 600; 800) for cushioning of a seat of a vehicle (640).

3.   The flow-braking device (100; 200) of claim 1 or 2, wherein the channel is configured to provide a flow rate of the fluid flow in a range of up to 10 liters per minute, or preferably, in a range between 0,1 and 2,0 liters per minute, or more preferably, in a range between 0,02 liters per minute and 0,15 liters per minute.

4.   The flow-braking device (100; 200) of claim 3,

wherein the channel is configured to provide the flow rate of the fluid flow in the range between 0,1 and 2 liters per minute by having the channel diameter or width in a range between 0,4 mm and 1,5mm and the channel length in a range between 0,5mm and 29,5mm, or preferably, the channel length equal to 2,6 mm;
wherein the channel is configured to provide the flow rate of the fluid flow in the range between 0,02 liters per minute and 0,15 liters per minute by having the channel diameter or width equal to 0,4 mm and the channel length in a range between 0,5mm up to 29,5 mm;
wherein the channel is configured to provide a flow rate of the fluid flow in a range between 0,3 liters per minute and 0,6 liters per minute by having the channel diameter or width equal to 0,8 mm and the channel length in a range between 0,5mm up to 29,5 mm; or
wherein the channel is configured to provide a flow rate of the fluid flow in a range between 1,85 liters per minute and 2,25 liters per minute by having the channel diameter or width equal to 1,5 mm and the channel length in a range between 0,5mm up to 29,5mm.

5.   The flow-braking device (100) of any one of claims 1-4,

wherein the solid body (102) is a hollow cylinder (102a), and
wherein the channel (104) is provided by a cylinder's hollow (104a).

6.   The flow-braking device (100) of claim 5, wherein the cylinder's hollow (104a) is arranged along the central axis of the hollow cylinder (102a),
preferably, wherein the cylinder's hollow has a circular cross section perpendicular to the central axis of the hollow cylinder (102a).

7.   The flow-braking device (100) of any one of claims 1-4, wherein the solid body (102) is a solid cylinder (102b; 102c) and wherein the channel (104) is provided as a recession (104b; 104c) embedded into the lateral side of the solid cylinder (102b; 102c).

8. The flow-braking device (100) of claim 7, wherein the recession (104b) extends along a straight line perpendicular to the end faces of the solid cylinder (102b), or wherein the recession (104c) extends along a curved line between the end faces of the solid cylinder (102c), preferably, wherein the curved line is a helical line spiraling around the solid cylinder (102c).

9. The flow-braking device (200) of any one of claims 1-4, wherein the solid body is a flat-sided solid (202; 302) having an upper side and a lower side extending between the at least two bladders (310, 312), wherein the channel (204; 304) is provided by welding the channel in the flat-sided solid (202; 302) between the at least two bladders and between the upper and the lower sides of the flat-sided solid (202; 302),
preferably, wherein the channel (204; 304) is welded along a curved (204a) and/or an angled (204b; 204c) line for providing fluid turbulence in the channel.

10. The flow-braking device (100; 200) of any one of claims 1-9, further comprising a proportionate valve (430) comprising an adjustable opening for regulating an opening of the channel thereby regulating the flow rate of the fluid.

11. A pneumatic system (300; 400; 500; 600; 800; 1000) for seat upholstery of a vehicle, the pneumatic system comprising:

   at least one flow-braking device (100; 200) of any one of claims 1-10 and
   at least two bladders (310, 312; 410, 412, 414, 416, 418; 526, 528; 610, 612; 710, 712; 810, 812; 1010, 1020) interconnected by the at least one flow-braking device.

12. The pneumatic system (300; 400; 500; 600; 800; 1000) of claim 11, wherein an inner space of the at least two bladders and the channel of the at least one flow-braking device is configured as a closed space having a predefined pressure.

13. The pneumatic system (300; 400; 500; 600; 800; 1000) of claim 11, wherein an inner space of the at least two bladders and the channel of the at least one flow-braking device is configured as an open system connectable to a pump (440).

14. The pneumatic system (1000) of any one of claims 11 to 13, further comprising at least one additional bladder (1020), each additional bladder (1020) having a spring (1030), and each additional bladder (1020) being connected to at least one of the at least two bladders (310, 312; 410, 412, 414, 416, 418; 526, 528; 610, 612; 710, 712; 810, 812; 1010, 1020) by at least one additional flow-braking device, wherein the at least one additional flow-braking device is the flow-braking device (100; 200) of any one of claims 1-10.

15. A seat component (700) for a vehicle comprising:

   the pneumatic system (300; 400; 500; 600; 800; 1000) of any one of claims 11-14 and
   a layer of foam (730), wherein the layer of foam (730) is arranged above the at least two bladders (310, 312; 410, 412, 414, 416, 418; 526, 528; 610, 612; 710, 712; 810, 812; 1010, 1020) when the layer of foam (730) is viewed in the direction (750) of gravity force when the seat component is for a seat cushion or when the layer of foam (730) is viewed in a front-to-back direction along the centerline of the vehicle when the seat component is for a seat backrest,
   preferably, wherein the layer of foam (730) has a thickness equal to or less than 50 mm, or more preferably wherein the layer of foam has a thickness in a range between 50 mm and 5 mm, or in a range between 10 mm and 30 mm.

100
100a

104
104a

102
102a

## Fig. 1a

100
100b

104
104b

104
104b

102
102b

## Fig. 1b

100
100c

104
104c

104
104c

102
102c

## Fig. 1c

Fig. 2a

Fig. 2b

Fig. 2c

Fig. 3

Fig. 4a

Fig. 4b

EP 4 617 118 A1

Fig. 5

Fig. 6b

Fig. 6a

Fig. 7

Fig. 8

Fig. 9a

Fig. 9b

1000                    1100

100;
200          1006

1010

1030

1020

# Fig. 10

Europäisches
Patentamt

European
Patent Office

Office européen
des brevets

# EUROPEAN SEARCH REPORT

**Application Number**

EP 24 16 3215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/233493 A1 (IRGENS-HAGEVIK PAAL [NO]) 20 August 2015 (2015-08-20) | 1-8 | INV. B60N2/90 |
| Y | * figures 5A-12C * | 9-15 | |
| A | CN 110 630 836 A (BEIJING AEROSPACE PROP INST) 31 December 2019 (2019-12-31) * figure 12 * | 1,5 | |
| Y | US 2 511 733 A (MORRISON WILLARD L) 13 June 1950 (1950-06-13) | 9 | |
| A | * figures 5,6 * | 1 | |
| Y | US 9 759 335 B2 (DRESSER INC [US]) 12 September 2017 (2017-09-12) | 10 | |
| A | * figures 2-7 * | 1 | |
| Y | US 2018/079335 A1 (JARANSON JOHN WAYNE [US] ET AL) 22 March 2018 (2018-03-22) | 11-15 | |
| A | * figures 4-7,10A-11B * | 1 | |
| X | FR 77 912 E (RENAULT) 11 May 1962 (1962-05-11) * figures 1-4 * | 1-4 | **TECHNICAL FIELDS SEARCHED (IPC)** B60N |

The present search report has been drawn up for all claims

| Place of search | Date of completion of the search | Examiner |
|---|---|---|
| Munich | 27 August 2024 | Pétiaud, Aurélien |

EPO FORM 1503 03.82 (P04C01)

## ANNEX TO THE EUROPEAN SEARCH REPORT
## ON EUROPEAN PATENT APPLICATION NO.

EP 24 16 3215

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2024

| Patent document cited in search report | | Publication date | Patent family member(s) | | Publication date |
|---|---|---|---|---|---|
| US 2015233493 | A1 | 20-08-2015 | EP | 2895777 A1 | 22-07-2015 |
| | | | US | 2015233493 A1 | 20-08-2015 |
| | | | WO | 2014042539 A1 | 20-03-2014 |
| CN 110630836 | A | 31-12-2019 | NONE | | |
| US 2511733 | A | 13-06-1950 | NONE | | |
| US 9759335 | B2 | 12-09-2017 | AU | 2015202079 A1 | 19-11-2015 |
| | | | BR | 102015009701 A2 | 27-02-2018 |
| | | | CA | 2888587 A1 | 01-11-2015 |
| | | | CN | 105351555 A | 24-02-2016 |
| | | | MX | 357238 B | 29-06-2018 |
| | | | US | 2015316192 A1 | 05-11-2015 |
| US 2018079335 | A1 | 22-03-2018 | CN | 107839551 A | 27-03-2018 |
| | | | DE | 102017121584 A1 | 22-03-2018 |
| | | | US | 2018079335 A1 | 22-03-2018 |
| | | | US | 2018326883 A1 | 15-11-2018 |
| FR 77912 | E | 11-05-1962 | NONE | | |

EPO FORM P0459

For more details about this annex : see Official Journal of the European Patent Office, No. 12/82